# EUROPEAN PATENT APPLICATION

(11) **EP 4 825 945 A1**
(43) Date of publication of application: **21.10.2026**
(21) Application number: 25171521.5
(22) Date of filing: 20.04.2025
(51) Int. Cl.: C10B 49/02, C10B 53/02, C10B 57/10, C10L 5/44, C10K 1/00

(54) **A METHOD AND AN APPARATUS FOR PRODUCING BIOGENIC CARBON DIOXIDE, CHARCOAL AND ORGANIC VOLATILE COMPOUNDS FROM BIOMASS**

(71) Applicant: Dr Guzmann, Marcus, 87561 Oberstdorf (DE)
(72) Inventor: Dr Guzmann, Marcus, 87561 Oberstdorf (DE)

(57) **Abstract**

The invention relates to a method and an apparatus for the continuous and energy-efficient coproduction of biogenic products comprising at least two of the group of charcoal, carbon dioxide and organic volatiles suitable for use in the metallurgical industry and agricultural applications, for use as fuel and feedstock in the production of fuels and chemicals, and for injection into geological structures for carbon storage. The method involves the carbonization of biomass, preferably cellulose- and lignin-containing material and the combustion of at least a part of the thereby produced gases, whereby exclusively produced oxygen is used for the combustion. The invention further relates to the production of said biogenic products according to said method to be used in metallurgical industry, to be used in agriculture, to be used as fuels and to be used as feedstock to produce fuels and chemicals, and/or to be injected in geological structures, whereby said products effectively meet the quality and sustainability criteria set by the industries using said products.

## Description

### FIELD OF THE INVENTION

The present disclosure pertains to a method and an apparatus for the continuous production of biogenic products and the application of such produced biogenic products. Specifically, the present disclosure concerns a method and an apparatus for the continuous production of biogenic products charcoal, carbon dioxide and organic volatiles for their applications in metallurgical industry, in agriculture, for use as fuel and/or for their use as feedstock for the production of sustainable fuels and chemicals, and/or for injection in geological structures for carbon storage, as well as the production the said products to be used in these applications.

### BACKGROUND OF THE INVENTION

The background information provided below is relevant to the present disclosure, but it may not necessarily represent prior art.

Charcoal is carbon that is generated by carbonization of biogenic cellulose- and lignin- containing material such as e.g., wood, grass, agriculture waste. Carbonization is defined as the irreversible chemical decomposition of organic substance in absence or limited presence of oxygen (O₂) and under the effect of heat. During the carbonization, biomass undergoes a sequence of changes and normally yields a black carbonaceous solid, so-called "charcoal", along with a mixture of gases, water and organic vapor. Generally, charcoal production through carbonization is maximized in a process combining low temperatures, low heating rates, extended residence time and absence of O₂, that is also called "slow pyrolysis".

Charcoal production has traditionally been done in batches for thousands of years, using various methods such as pits, retorts, or wagon retorts. In contrast, continuous carbonization processes are performed using equipment like horizontal or vertical retorts, drum kilns, or fluidized bed reactors. Modern methods of charcoal production involve carbonizing wood or agricultural waste in retorts, yielding higher efficiencies of charcoal production compared to traditional kilning methods. The properties of charcoal depend on factors such as the material charred, the temperature and duration of carbonization. Due to the high industrial demand for industrial/metallurgical grade charcoal, the charcoal industry started to focus on more efficient techniques to increase charcoal yield and purity, while chemical by-products became deprioritized. Same applies for the industrial production of charcoal, also referred to as "biochar" for agricultural applications that traditionally focuses on the biochar yield, optionally combined with heat and power generation.

Subsequently, it was discovered that impurities in charcoal, primarily found in the bark, contributed significantly to the ash content. Studies have shown that for example the ash content of wood bark may be up to ten times the ash content of actual heartwood. To address this, the industry began separating the bark from the charcoal to reduce impurities in the final product.

To enhance the efficiency of charcoal production, various types of retorts have been developed over the years, ranging from batch-type production to semi-continuous and continuous systems. Examples include the Arkansas (batch), Reichart retort (batch/semi-continuous), and Lambiotte (continuous). A charcoal retort is an apparatus being a closed vessel or kiln used to produce charcoal from wood or other organic materials through carbonization. In this retort, the organic material is heated in the absence of O₂, which causes its decomposition into at least biogenic charcoal, biogenic volatile organic compounds (BVOC) and other gaseous products. The process is also called dry distillation of bio-derived substances. The formation of products and their yields is determined by process design including e.g., temperature, heating rate and residence time in the reactor, and further the feedstock composition. In this retort, at least a part of the produced BVOC and/or gaseous products deriving from the carbonization are burnt in a combustion step with an oxygen deficit to provide heat to the carbonization, whereby ambient air is introduced to the combustion step to provide the oxygen. In said combustion and/or carbonization of the biomass biogenic carbon dioxide (CO₂) is produced, whereby said CO₂ is significantly diluted by nitrogen (N₂) that is introduced to the process by the air. The term "biogenic CO₂" encompasses also CO₂ generated from combustion of biogenic, carbon-based material such as BVOC, carbon monoxide, and/or biofuels like biomethane, bio-methanol and bioethanol. BVOC include bio-based, volatile compounds, e.g., terpenes (monoterpenes and sesquiterpenes), aldehydes (hexanal, propanal, butanal, pentanal, heptanal, acetaldehyde, formaldehyde, and 2-furancarboxaldehyde (furfural)), organic acids (acetic acid, hexanoic acid, and formic acid), alcohols (ethanol, methanol), ketones (acetone, 2-propanone), aliphatic or aromatic hydrocarbons, ethers and esters.

The wood carbonization process can be broken down into several stages. The first stage involves drying of the wood, occurring at temperatures between 100°C and 200°C, with minimal decomposition of the wood. In the second stage, which takes place at temperatures of around 200°C to 270°C, the wood begins to decompose more significantly, releasing gases such as CO₂ and CO, as well as vapors of organic compounds like e.g., acetic acid. A variation can include a so-called "torrefaction" taking place and at temperatures between 200°C and 320°C. The third stage, occurring at temperatures from 270°C to 500°C, can be described as the hydrocarbon stage, with the exothermic decomposition of the wood material while generating heat on its own. During this stage, additional compounds like e.g., polycyclic aromatic hydrocarbons are released, with a substantial increase in gas production compared to earlier stages. Further carbonization of the wood material takes place at temperatures above 500°C.

In practice, the carbonization process is done continuously using equipment such as retorts, kilns, drum furnaces, or fluidized bed furnaces, eliminating the need for cooling and unloading between batches, thereby reducing costs, improving energy efficiency, and enhancing the overall process.

The Lambiotte retort, which resembles a vertical configuration, operates by loading wood material at the top via a skip and airlock-type bell valve system. In the first zone at the top of the retort, as the wood descends through the retort, it is exposed to inert hot gases rising through the wood burden in a countercurrent principle, drying the wood and preparing it for carbonization. In the second zone below, the wood undergoes carbonization at controlled temperatures, forming charcoal. Depending on the requirements set for the charcoal, the carbonization temperature is typically between 500-550°C. The carbonization temperature is achieved by direct heating of the carbonization, whereby at least a part of the gases produced during the carbonization process are introduced together with a stream of ambient air to the top part of the carbonization, whereby at least a part of said introduced gases is combusted with an oxygen deficit. A first part of the hereby formed hot gases is moved upwards through the wood burden in the drying zone, while a second part of the hot gases is moved downwards in the carbonization through the carbonizing wood/charcoal burden. The hereby in the carbonization formed carbonization gases are withdrawn from the bottom of the carbonization zone by using a blower. This Lambiotte configuration is characterized by a very high charcoal production yield; only pyroligneous vapors and carbonization gases are burnt inside the retort, not wood, nor charcoal, giving an outstanding output of charcoal. A variation of the Lambiotte introduces air and carbonization gases in the bottom of the carbonization zone with combustion taking place in said bottom zone, whereby the formed hot gases are directed in a countercurrent principle through carbonization and drying, whereby formed carbonization gases are withdrawn at the top of the retort. Such configuration enables maximizing the yield of BVOC, while charcoal yield is decreased. Another alternative configuration utilizes indirect heating, whereby the combustion of carbonization gases and/or other fuels takes place in the absence of wood, whereby at least a part of the heated combustion gas is introduced to the carbonization step, but there is no flame or combustion occurring inside the charcoal bed itself. This indirect heating approach keeps the reactor atmosphere O₂-free while still delivering the high temperatures needed for pyrolysis of the wood.

The residence time of the wood in the retort can be adjusted by varying discharge times, which depends on the moisture content of the wood feed. In the lower, third zone, the formed charcoal is cooled down by heat-depleted, inert (oxygen-free) carbonization gas, and the cooled charcoal is discharged at ambient temperature. These above-mentioned steps might be separated by a gas-lock or may take place in different reactors. The O₂ for the combustion is supplied by injection of ambient air. Byproducts such as CO₂, H₂, CH₄ and their separation are not considered in prior art.

Methods for the production of charcoal are prior art and are e.g., disclosed in WO 2012/164160 A1 or US 2289917A. Charcoal production according to the prior art is not aiming to maximize the carbon efficiency, meaning that yield and/or energy efficiency of the conversion of the carbon contained in the biomass feedstock into usable products charcoal, CO₂ and/or BVOC is not maximized.

The charcoal production according to the prior art uses ambient air to supply O₂ for the combustion of pyroligneous vapors and carbonization gases, and/or other fuels like e.g., biomass, biogenic products, BVOCs, or externally supplied fuels like natural gas or diesel. Ambient air consists of roughly 21 mol% O₂, 78 mol% nitrogen, and 1 mol% argon. Therefore, using air in the combustion introduces a significant amount of nitrogen into the process, resulting in a highly diluted CO₂ gas stream of less than 30 mol%. Separation of produced CO₂ from a charcoal production process is not described in the prior art. However, in case CO₂ separation is desired, an expert would typically select a conventional amine-based CO₂ separation technology due to the low CO₂ concentration in the flue gas of such charcoal production process using air. However, the amine-based separation process for diluted CO₂ streams is characterized by a low efficiency, since it encompasses heating and cooling of large physical absorbent volumes for CO₂ desorption and absorption, resulting in relatively high operational- and capital expenditures, leading to substantial CO₂ separation costs.

Conventional heat and power production using fossil fuels like coal contribute to global CO₂ emissions with an approx. 20% share. Reducing CO₂ emissions from fossil heat and power plants is prior art and is done by amine-based carbon capture, however heat demand of such capture process is high, effectively reducing the output of the heat and power plant by approx. 20%. Replacing fossil coal by biomass and/or biogenic charcoal is state-of-the-art. Coal-fired heat and power plants can be operated with up to 20% substitution of fossil coal by biomass without significant plant modification to reduce fossil CO₂ emissions. However, charcoal supply is limited, and its cost will significantly impact the economics of operations.

Currently, almost two billion tons of steel are produced globally each year, using a high proportion of fossil coke-based, blast furnace steelmaking process. Steel production is among the most carbon-intensive manufacturing processes, with total direct fossil CO₂ emissions estimated at 2.6 billion tons per year, representing between 7% and 9% of global anthropogenic CO₂ emissions.

To meet the Paris Accord target, carbon emissions from steel production must be reduced by 90%. Hence, the steel industry is in the transition aiming to reduce CO₂ emissions. Steelmakers have started replacing existing blast furnaces with direct reduced iron (DRI) and electric arc furnaces (EAF) facilities that can use renewable (green) H₂ and renewable electricity. Hereby, the H₂ is produced by electrolyzer applying renewable electricity to efficiently reduce the CO₂ emissions of the steel production. The production of so called "carbon steel" requires a source of carbon within the process, with a first part of the carbon remaining as elemental carbon in the steel and a second part of the carbon being emitted as CO₂. The elemental carbon content determines the mechanical properties of the steel. The final steel product can contain up to 4.0 w% carbon. Carbon steel can be divided into main categories low-carbon with < 0.25 w%, medium-carbon with 0.25-0.5 w%, high-carbon with 0.5-1.25 w% and ultra-high-carbon steel with 1.25-4 w% carbon content. To achieve these carbon contents, natural gas, anthracite coal, coke, graphite and/or syngas are applied within the DRI and/or EAF based steel production. However, any used fossil-based carbon source will limit the potential to reduce the CO₂ emissions of the steel production process, since the provided carbon source will partially be converted to CO₂ and hence, result in fossil CO₂ emissions. The use of biogenic charcoal in e.g., the EAF/DRI as reducing agent (chemically reducing iron oxide/iron ore to elemental iron by forming CO₂) and/or source of carbon for the desired iron or steel quality is prior art. As an example, to decarbonize the iron/steel production based on a DRI/HBI process, the use of a blend of 10 mol% natural gas and 90 mol% H₂ in the DRI process, followed by an EAF with the addition of 20-25 kg of charcoal per ton of steel results in a carbon content of 1.5 w%, with the remainder carbon being emitted as CO₂. These emissions increase pollution levels and contribute to global warming being a climate gas. The corresponding use of these biogenic products in the iron and steel making process results in biogenic CO₂ emissions that are considered as climate neutral, reducing the CO₂ footprint, also called "carbon intensity" of the iron/steel product. Further, the iron/steel carbon intensity is reduced by at least partially replacing fossil reducing agents (e.g., coke, natural gas) by biogenic charcoal in conventional iron/steel production like blast furnace, DRI/EAF, whereby fossil CO₂ emissions are reduced.

High Carbon (HC) ferrochrome can include 60-65 w% of chromium, 4 w% of silicon, 6-8 w% of carbon, and 0.05 w% each of phosphorus and sulfur. It is produced by either a blast furnace, an electric furnace, or a plasma furnace method. Common reducing agents are fossil coal or coke. A solution to reduce the carbon intensity of ferroalloys including ferrochrome is substituting said coal/coke by biogenic charcoal. A certain charcoal quality is mandatory, comprising e.g., a low mercury content, <1 w% volatiles, <0.2 w% alkalis, < 0.07 w% sulphur and <0.03 w% phosphorus content, and a sufficiently high mechanical strength. Today, supply of both suitable coal/coke and charcoal for High Carbon (HC) ferrochrome production is limited, and cost is quite high.

Metallurgical-grade silicon is produced by the reduction of natural quartzite (silica) with coke (carbon) in an electric arc furnace. The resulting silicon is metallurgical-grade silicon (MG-Si) with 98% purity. Large quantities of MG-Si are used in the metallurgical industry, e.g., for alloying with iron in steel production. Further, MG-Si is used to produce semiconductor materials that are used in e.g., integrated circuits, known as microchips, and solar cells. However, MG-Si contains various impurities and further purification steps are required before its use in ICs and solar cells, adding complexity and cost. The Siemens process is an example to achieve high-purity (electronic grade) silicon. This costly silicon purification process can be optimized by using low-ash coal for producing MG-Si from quartz. Low-ash coal with a high silica reaction index is commonly utilized, but its supply is limited. The global energy transition and the increasing demand for photovoltaic (PV) systems are expected to lead to a shortage of low-ash coal and a significant rise in its cost. Additionally, using fossil coal in MG-Si production emits fossil CO₂, contributing to global warming. This low-ash coal can be replaced with charcoal to reduce CO₂ emissions, and preferably charcoal with low ash content is used.

Charcoal is used as a reducing agent, e.g., in chemical processes and in the metallurgical industry to produce ferrous (iron and steel) and non-ferrous metals. Further, it is used as fuel for heat and power production or as soil enhancer in agriculture. Further applications are i.e., its use as activated carbon, or as an ingredient in cosmetics.

Charcoal, when used as soil enhancer in agriculture, is also known as biochar. Its addition to soil increases the soil fertility by e.g., improving the nutrient retention capacity. While producing biochar from biomass, the biochar is considered as carbon sink since the biochar contains high concentrations of recalcitrant carbon, meaning, it effectively sequesters the carbon with a mean residence time of 2,000 years. Hence, the production of biochar is considered as a method to create negative CO₂ emissions, whereby carbon credits are generated that can be traded on the voluntary carbon market. An electrolyzer is a device that uses electricity to split water or other components into their constituent elements through electrolysis. Various electrolyzer technologies exist, including alkaline, proton exchange membrane (PEM), anion exchange membrane (AEM) and solid oxide electrolyzer cell (SOEC), that split water into hydrogen (H₂) and oxygen (O₂). Further, in a chloralkaline electrolyzer an aqueous sodium chloride solution is split in H₂, chlorine and caustic. H₂ being produced by an electrolyzer using renewable energy such as solar, wind and hydropower is called green H₂. H₂ being produced by means of e.g., steam reformer and by using fossil-based hydrocarbons as feedstock, in combination with capturing and permanently storing the produced byproduct CO₂, is called blue H₂. The current energy transition necessitates emission-free products derived from renewable electricity sources such as solar, wind and hydropower. Renewable electricity is used to produce green H₂, that is chemically reacted with biogenic CO₂ to produce fuels like e-methanol and e-SAF (sustainable aviation fuel) for maritime, chemical and aviation industry. The combustion of said e-methanol and e-SAF will result in biogenic CO₂ emissions that are considered as carbon neutral. When used as fuel, e-methanol and e-SAF only emit said biogenic CO₂ emissions. Biogenic CO₂ is produced from combustion, gasification and fermentation of biomass, and incineration or gasification of municipal solid waste (MSW) containing biomass. However, thereby generated biogenic CO₂ volumes are limited, and the efficiency of capturing/separating the CO₂ is low. Direct air capture (DAC) is used to capture/separate biogenic CO₂ from the atmosphere, but the efficiency of DAC is significantly lower than capturing CO₂ from flue gases due to the very low concentration of less than 500 ppm CO₂ in ambient air.

Prior art processes to provide biogenic CO₂ are compromising on energy and capital efficiency, and hence, production cost of the CO₂ to produce products such as e-methanol and e-SAF are high. BVOC are known from prior art to be used as feedstock for the production of chemicals or as feedstock for refineries. Its use enables the respective industries to lower the carbon intensity of resulting products deriving. However, supply of BVOC is limited and cost, due to the low efficiency of its generation process, can be prohibitive for use.

Based on the above-mentioned drawbacks, there is a need for an improved apparatus and method for producing charcoal, CO₂ and BVOC from biomass that offer viable alternatives.

### OBJECT OF THE INVENTION

The object of the present invention is to disclose a method and an apparatus for the continuous co-production of at least two of the group of biogenic products comprising charcoal, CO₂ and BVOC from cellulose- and lignin-containing material, whereby the energy efficiency of said method and apparatus is superior compared to prior art, and further, said products to be used in metallurgical- and/or heat/power industry and/or in agriculture, furthermore to be used as fuels, as feedstock to produce sustainable fuels and/or chemicals, and/or to be injected in geological structures for carbon storage, whereby said products effectively meet the quality and sustainability criteria set by the industries using or storing said products.

### SUMMARY OF THE INVENTION

A brief overview of the invention, highlighting its key features and advantages, is described below. The objective of this disclosure is to improve upon one or more issues from the existing context described in the background or to offer a viable alternative solution.

According to one aspect the invention relates to a method for the continuous co-production biogenic products comprising at least two of the group of charcoal, CO₂ and BVOC, whereby charcoal is to be used in metallurgical- and heat and power industry, in agriculture, whereby further co-products BVOC and/or CO₂ are to be used in the production of sustainable fuels, and/or whereby CO₂ is to be injected in geologic structures for carbon storage, wherein in order to maximize efficiency the method comprises at least:
- separating CO₂ 8 from a gas stream, whereby the CO₂ is formed in a combustion 6 and/or a carbonization 4, whereby said combustion 6 is preferably combined with said carbonization 4 and whereby dried cellulose- and/or lignin-containing material being formed in drying 3 is present while gases are combusted, and whereby at least a part of the separated CO₂ from a CO₂ separation 8 is withdrawn from method 100,
- converting dried cellulose- and/or lignin-containing material to charcoal in the carbonization, whereby a gas stream is passed through the carbonization with less than 5 mol% O₂, preferably with less than 1 mol% O₂, most preferably with 0% O₂ content,
- operating the combustion with an O₂ deficit, whereby at least a part of the gases formed in the carbonization are oxidized, and whereby O₂ is exclusively provided as produced O₂, and whereby a gas phase concentration of said O₂ in the combustion is 10-50 mol%, preferably 15-40 mol%, and most preferably less than 20-35 mol%,
- whereby said oxygen for combustion is produced in O₂ production by at least one of the following methods comprising cryogenic air separation, vacuum pressure swing absorption and water electrolysis, and whereby the said produced O₂ has a purity of at least 90%, preferably at least 95%, most preferably at least 99% by volume.

According to one aspect the invention relates to a method that comprises at least the steps of the cellulose- and/or lignin-containing material initially being dried, and the dried cellulose- and/or lignin-containing material being transferred to carbonization, whereby the carbonization is directly and/or indirectly heated by the combustion, and whereby at least a part of inert gas stream comprising flue gases from said combustion is introduced into the carbonization.

According to one aspect the invention relates to a method that comprises at least a part of the gases produced during the carbonization process being introduced together with a stream of produced O₂ to the carbonization, whereby at least a part of said introduced gases is combusted with an oxygen deficit providing direct heating in presence of the cellulose- and/or lignin-containing material. A first part of the hereby formed hot gases is moved in a countercurrent principle through the cellulose- and/or lignin-containing material in the drying, while a second part of the hot gases is moved in the carbonization through the carbonizing cellulose- and/or lignin-containing material/charcoal burden. According to one aspect the invention relates to a method that comprises at least a part of the gases produced during the carbonization being introduced together with a stream of produced O₂ to the carbonization section where predominantly formed charcoal is present during the combustion, whereby the hereby formed hot gases are directed in a countercurrent principle through both the carbonizing and drying cellulose- and/or lignin-containing material.

According to one aspect the invention relates to a method that comprises indirect heating of the carbonization and/or drying, whereby the combustion of carbonization gases and/or other fuels takes place in the absence of wood and/or charcoal, whereby at least a part of the heated combustion gas is introduced to the carbonization and or drying step, but there is no flame or combustion occurring inside the cellulose- and/or lignin-containing material bed and/or charcoal bed itself. This indirect heating approach keeps the reactor atmosphere O₂-free while still delivering the high temperatures needed for pyrolysis and drying of said material.

According to one embodiment of the invention, the first part of the gases deriving from the carbonization of the cellulose- and/or lignin-containing material is oxidized in the combustion step for heating of the carbonization. According to one embodiment of the invention, the second part of the gases deriving from said carbonization is processed in a vapor removal step comprising at least condensation and removal of the condensed water and organic vapors from the gas stream.

According to one embodiment of the invention, the CO₂ separation from a CO₂ containing gas stream that derives from the vapor removal step and/or combustion step is done by a cryogenic method that comprises at least compressing and cooling, condensing, drying, refrigerating and partially liquefying, and subsequent rectification of that CO₂ containing stream. According to one embodiment of the invention, at least a part of the gas phase formed in the partial gas liquefaction of the CO₂ separation is subjected to a physical absorption step forming a higher polar fraction comprising CO₂ and a less polar fraction comprising fuel gas components such as e.g., CO and H₂.

According to one embodiment of the invention, CO₂ containing streams are recycled to control the temperature in the combustion. According to one embodiment of the invention, no air (and hence, no nitrogen) is purposely introduced to the method and apparatus.

According to one embodiment of the invention, the O₂ concentration in the combustion step can be flexibly adjusted to control the temperature.

According to one embodiment of the invention, the combustion is done in two subsequent stages with first part of produced O₂ introduced in stage 1 and second part of produced O₂ introduced in stage 2. According to one embodiment of the invention, the method comprises two separate combustion units, the first one for heating of the carbonization and the second one for the generation of steam, whereby the second combustion is done in a steam boiler.

According to one embodiment of the invention, the cellulose- and/or lignin-containing material is bio-derived and includes, but is not limited to e.g., lignocellulose, grass, agricultural waste, coconut shell, wood, preferably heartwood. According to one embodiment of the invention, the used wood grows fast, has a low ash and low phosphate content, like e.g., eucalyptus, blue gum wood. According to one embodiment of the invention the wood is debarked, and mechanical impurities are removed. According to one embodiment of the invention, the debarked wood material is initially processed to reduce the wood material in size to a particle-like form, preferably with a unified size and shape. According to one embodiment of the invention, the cellulose- and/or lignin-containing material is pretreated prior to carbonization by means of e.g., separation and/or drying and further by means of e.g., disintegrating, shredding, extrusion, compacting and/or drying.

According to one embodiment of the invention, the carbonization of the cellulose- and/or lignin-containing material is carried out between 270-950°C, more preferably between 350-700°C and most preferably between 400-600°C. According to one embodiment of the invention, the cellulose- and/or lignin-containing material is carbonized at a temperature of 500-600°C, resulting in a higher charcoal yield. According to one embodiment of the invention, the cellulose- and/or lignin-containing material is carbonized at temperatures larger than 700-950°C resulting in a higher BVOC yield. According to one embodiment of the invention, a slow pyrolysis is applied with a heating rate between 0.01-10°C/s. According to one embodiment of the invention, the by-products CH₄, CO and H₂ are used to produce sustainable fuels such as methanol, diesel, naphtha and aviation fuel, are used as reduction agents in metal production and/or are used as fuel.

According to one embodiment of the invention, the BVOC, fuel gas streams from CO₂ separation, the bark of the wood and/or the dust formed in wood preparation are used as fuel in the combustion. According to one embodiment of the invention, externally sourced fuel, e.g., biomass, biogas and biodiesel is applied in the combustion.

According to one embodiment of the invention, the required O₂ for the combustion of gases, biogenic dust/bark, fuel gas, BVOC and/or other fuels in the combustion is provided as an O₂/CO₂ blend, whereby the CO₂ is deriving from the CO₂ separation.

According to one embodiment of the invention, the required O₂ for the combustion of gases, liquids or solids is injected as pure oxygen in the combustion without prior blending with e.g., recycled CO₂. According to one embodiment of the invention, at least a part of the oxygen-free gases from the combustion is used as "circulation gas" in the drying and/or carbonization. According to one embodiment of the invention, the heat energy from the combustion is at least partially used for drying and/or carbonization of the biomass.

According to one embodiment of the invention, the thermal energy generated in the combustion is at least partially utilized to produce steam, whereby the steam is used for at least one of the following:
- provide heat for drying and carbonization of said cellulose- and/or lignin-containing material,
- to drive a steam turbine for driving a compressor and/or producing electric power, and/or
- to provide process heat within the method and/or other processes outside the method.

According to one embodiment of the invention, the CO₂ generated in the carbonization is at least partially recycled.

According to one embodiment of the invention, the produced charcoal exhibits low volatiles, ash, sulphur, aluminum and phosphorus content, and further exhibits a mechanical strength that is required in metallurgic applications.

The invention also relates to an apparatus for the continuous co-production of at least two of the group of charcoal, CO₂ and BVOC, whereby the products are produced from biomass, preferably bio-derived cellulose- and/or lignin-containing material, whereby said apparatus is more advantageous over prior art, and said apparatus is comprising at least the following process units:
- a CO₂ separation unit that separates CO₂ from a gas stream, whereby the CO₂ is formed in the combustion and/or the carbonization and whereby the unit comprises at least compressing and cooling, condensing and drying in a group of method steps, refrigerating, partial gas liquefaction and rectification.
- a carbonization unit 4 for converting the dried cellulose- and/or lignin-containing material to charcoal, whereby the carbonization 4 is least in part directly and/or indirectly heated by the combustion 6, whereby said combustion 6 is preferably combined with said carbonization 4 and whereby dried cellulose- and/or lignin-containing material being formed in drying 3 is present while gases are combusted, and whereby at least a part of the heated flue gas from combustion 6 is passed through the carbonization 4 with less than 5 mol% O₂, preferably with less than 1 mol% O₂, most preferably with 0% O₂ content, and
- a combustion unit that is operated with an oxygen deficit, whereby gaseous, liquid and/or solid fuels are oxidized, and whereby O₂ is exclusively provided as produced O₂, and whereby a gas phase concentration of said O₂ in the combustion is between 10-50 mol%, preferably between 15-40 mol%, and most preferably between 20-35 mol%.

The invention also relates to the method for co-producing at least two of the group of products that are charcoal, BVOC and CO₂ for use of at least one of said group as fuel, as reduction agent and/or source of carbon in the production of metals, ferroalloys, ferrochrome and metallurgic silicon, as feedstock for the production of fuels or chemicals, and/or for injection into geological structures, whereby said products are produced continuously from biomass, preferably biogenic cellulose- and/or lignin-containing material, whereby said method is more advantageous over prior art methods, and said method comprising at least the following steps:
- separating CO₂ 8 from a gas stream, whereby the CO₂ is formed in a combustion 6 and/or a carbonization 4, whereby said combustion 6 is preferably combined with said carbonization 4 and whereby dried cellulose- and/or lignin-containing material being formed in drying 3 is present while gases are combusted, and whereby at least a part of the separated CO₂ from a CO₂ separation 8 is withdrawn from method 100,
- converting dried cellulose- and/or lignin-containing material to charcoal in the carbonization, whereby a gas stream is passed through the carbonization with less than 5 mol% O₂, preferably with less than 1 mol% O₂, most preferably with 0% O₂ content,
- operating the combustion with an oxygen deficit, whereby gaseous, liquid and/or solid fuels are oxidized, and whereby O₂ is exclusively provided as produced O₂, and whereby a gas phase concentration of said O₂ in the combustion is between 10-50 mol%, preferably between 15-40 mol%, and most preferably between 20-35 mol%,
- whereby said oxygen for combustion is produced in an O₂ production by at least one of the following methods comprising cryogenic air separation, vacuum pressure swing absorption and water electrolysis, and whereby the said produced O₂ has a purity of at least 90 mol%, preferably at least 95 mol%, most preferably at least 99 mol%.

Additional features and benefits of the present disclosure will become clearer from the following description, which is not meant to restrict the scope of the disclosure.

### BRIEF DESCRIPTION OF THE DRAWING

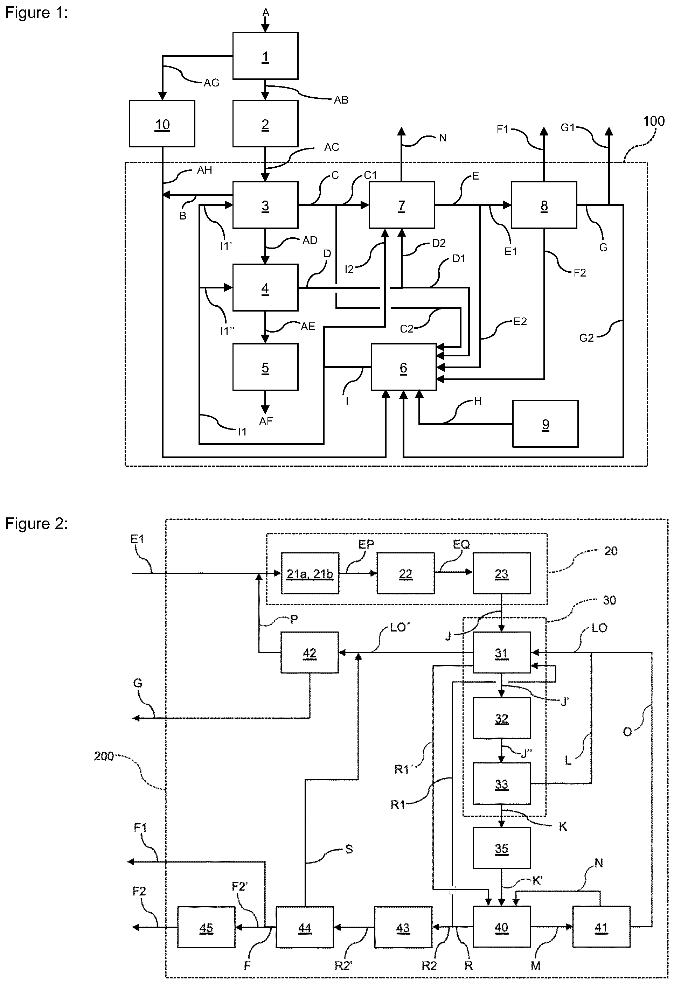

An embodiment of the present disclosure of the method 100 and corresponding apparatus for the co-production of charcoal, CO₂ and/or organic volatiles from biomass, preferably cellulose- and/or lignin-containing material is schematically illustrated and indicated in Figure 1. An embodiment of the present disclosure of the process step 9, that is the CO₂ separation step in the method 100 and said corresponding apparatus, is detailed and schematically illustrated as group 200 in Figure 2. Despite not being explicitly shown in Fig. 1 and Fig. 2, additional process configurations are included in the present invention.

The cellulose- and/or lignin-containing material that is used as feedstock is wood A. The bark and mechanical impurities are removed in the wood debarking unit 1.

The debarked heartwood AB is conveyed to a wood preparation unit 2 to reduce the size of the wood material. Remaining mechanical impurities are removed from the wood. The prepared particle-like heartwood material AC is then dried in the drying unit 3. The dried heartwood material AD is further moved into the carbonization step 4 for carbonization in an O₂-free atmosphere. Neither a flame nor combustion occur inside the carbonization 4.

The particle-like charcoal AE formed in carbonization 4 is conveyed to charcoal cooling 5 that applies indirect and/or direct cooling of the charcoal by a) gases and/or water. The cooled charcoal AF is withdrawn from the method 100.

A first part C1 of the gases C deriving from drying 3 is transferred to the vapor removal step 7 comprising at least a condenser and a gas/liquid separator to remove water and/or BVOC stream N from the gas stream. A second part C2 of said gases C is optionally transferred to combustion 6. The ratio of stream C1 versus stream C2 can be flexibly adjusted.

A first part D1 of the gaseous products D formed in carbonization reaction is reacted in the combustion step 6. The second part of the gaseous products D2 deriving from the carbonization 4 is transferred to the vapor removal 7 to remove water and BVOC stream N from the gas stream and to withdraw from method 100. The ratio of stream D1 versus stream D2 can be flexibly adjusted.

The first part E1 of the gas stream E from vapor removal 7 is transferred to the CO₂ separation step 8 that captures CO₂ cryogenically. Method step 8 comprises group 200 of method steps as indicated in Figure 2. A first part F1 of separated CO₂ from the CO₂ separation 8 is withdrawn from method 100. Optionally, a second part F2 of the produced CO₂ from step 8 is recycled and used in combustion 6 as inert dilutant to adjust the oxygen concentration of the gas phase reacted in combustion 6. The ratio of stream F1 versus stream F2 can be flexibly adjusted. A first part G1 of stream G from the CO₂ separation 8 containing at least CH₄, H₂ and/or CO is withdrawn from method 100, while the second part G2 of stream G is optionally used as fuel gas in combustion 6. The ratio of stream G1 versus stream G2 can be flexibly adjusted.

The second part E2 of the gas stream E from vapor removal 7 is recycled and used to moderate the O₂ concentration in combustion 6. The ratio of stream E1 versus stream E2 can be flexibly adjusted. The combustion step 6 is done with an O₂ deficit, whereby the required O₂ stream H for the combustion step 6 is provided by the O₂ supply source 9. Neither air is used in the combustion 6, nor is any air purposely introduced in method 100 and the corresponding apparatus. The O₂ supply source 9 provides produced O₂ stream H and comprises a cryogenic air separation unit (ASU), a vacuum pressure swing absorption unit (VPSA), both ASU and VPSA separating O₂ from air, and/or an electrolyzer splitting water by electrolysis.

The bark stream AG from wood debarking 1 is processed in bark preparation 10 to reduce water content and/or to reduce particle size, then transferred as stream AH to combustion 6. Further, dust stream B generated and separated during the drying C is optionally added to stream AH.

The combustion step 6 generates heat by the combustion of streams D1, E2, G, AH, B and/or G2, whereby at least a part of that heat is used to indirectly heat the carbonization. Combustion 6 produces an O₂-free flue gas stream I, thereof at least a first part I1 is used as circulation gas that is introduced to the drying 3 as stream 11' and/or carbonization 4 as stream I1". The heated circulation streams I1' and I1" directly heat the carbonization 4 and/or drying 3 by convective heating. A second part I2 is processed in the vapor removal step 7. The ratio of stream I1 versus stream I2 can be flexibly adjusted. Further, the ratio of stream I1' and 11" can be flexibly adjusted.

The method 100 as indicated and illustrated Figure 1, and the corresponding apparatus for continuous co-production of biogenic products charcoal, CO₂ and/or BVOC are included in the present invention.

Figure 2 schematically illustrates and indicates details of the group 200 of method steps for the CO₂ separation and corresponding apparatus for CO₂ separation in accordance with an embodiment of the invention, group 200 of method steps representing method step 9 in method 100 and corresponding apparatus.

The group 200 generally comprises forming a fraction predominantly or exclusively containing CO₂. In the group 200, the starting gas mixture E1 comprises at least in part CO₂. A recycling stream P explained below is optionally added to stream E1. In the group 200, the starting gas mixture of E1 and P is enriched in CO₂ and depleted in potential impurities like e.g., sulphur dioxide and water in a first group 20 of method steps forming an intermediate gas mixture J, the first group 20 of method steps including compressing 21a, cooling 21b, condensing 22 and drying 23. The intermediate gas mixture J is at least partially submitted to a second group of method steps 30, the second group 30 of method steps including a gas liquefaction through refrigeration in steps 31 and/or 32, and liquid/gas separation 33 as further explained below.

The first group 20 of method steps includes subjecting the starting gas mixture to at least one compression step 21a, optionally with at least 1 step intercooling 21b. Condensates formed in this compression step 21a are not shown here for reasons of conciseness, and the first compression step 21a and the optional intercooling 21b are shown as a common block 21a, 21b. The compression 21a/21 b is optionally performed in multistage compression with intermediate cooling.

At least a part of the compressed gas EP remaining after the compression 21a and the optional intercooling 21b is subjected to a cooling step 22 forming further condensate (not shown). At least a part of the remaining gas EQ is subjected to a drying step 23, obtaining a dried gas mixture, and at least a part of the dried gas mixture is used as the intermediate gas mixture J which is subjected to the second group 30 of method steps.

The refrigeration steps 31 and/or 32 result in partial gas liquefaction, whereby refrigeration 31 forming stream J' is optionally combined with a compression step, followed by an optional further refrigeration step 32 forming stream J", preferably subcooling in 32, and a gas/liquid separation of stream J" in step 33. Ultimately, by refrigeration steps 31 and/or 32, the liquid, CO₂ rich fraction K and the gaseous fraction L are formed. The Stream K is further processed through a heat exchanger 35 resulting in stream K'.

The liquid fraction K' is, in the example shown, processed in a rectification column 40, forming a liquid, CO₂ rich stream R and a gaseous, CO₂ depleted stream M. The stream M is subjected to a condensing and a gas/liquid separation in step 41, whereby a liquid, CO₂ rich stream N and a gaseous, CO2 depleted stream 0 are produced. Stream N is subjected to rectification in column 40. In the example shown, streams L and O are merged to LO and used for cooling in refrigeration step 31 and/or 32, and further optionally used for cooling in the refrigeration step 22.

The gaseous stream LO' is subjected to a physical absorption step 42, comprising either a molecular sieve-based PSA or a solvent-based wash, preferably a PSA step, step 42 producing a higher polar fraction as the recycle stream P comprising CO₂ and a less polar fraction G comprising at least CH₄, CO and/or H₂, and G being withdrawn from group 200 of method steps. The physical absorption step 42 can be embodied as known from the art, particularly including a regeneration system. A mole sieve or methanol solvent may be used therein.

A first part R1 of the liquid stream R, predominantly or exclusively containing CO₂, is used for cooling in refrigeration steps 31 and/or 32, and the subsequent stream R1' is subjected to be processed in the rectification column 40. Streams R1', K' and N are processed in rectification step 40, preferably entering the column at different tray levels. The second part R2 of the liquid stream R is further cooled in step 43, preferably using expansion cooling of the gas stream in step 43, to liquid stream R2', and optionally stored in a liquid CO₂ tank 44. Boil-off gas S from 44 is optionally recycled and preferably blended with stream LO', ideally S is mixed with stream F2 (not shown). Liquid CO₂ stream F from tank 44 is at least as a first part withdrawn as stream F1 from group 200 of method steps, and subsequently from method 100. A second part F2' of liquid CO₂ stream F is transferred to vaporization step 45 and converted into gaseous stream F2, that is withdrawn from group 200 of method steps.

### DETAILED DESCRIPTION OF THE INVENTION

The present disclosure and its embodiments are presented to comprehensively convey its scope to those skilled in the art. Detailed information about specific components and methods is provided - also in the above - to ensure a thorough understanding of the embodiments. However, it should be understood by those who are skilled in the art that these details are not intended to limit the scope of the disclosure. Additionally, some well-known processes, apparatus structures, and techniques are not described in detail.

The terminology used in this disclosure is intended solely to describe specific embodiments and should not be interpreted as limiting the scope of the disclosure. Terms such as "a," "an," and "the" may include plural forms unless the context clearly indicates otherwise. The terms "comprises," "comprising," "including," and "having" are open-ended and denote the presence of specified features, steps, operations, elements, modules, units, or components, but do not exclude the addition of other features or components. The sequence of steps presented in the methods and processes of this disclosure is not necessarily required to be performed in that specific order, and additional or alternative steps may be used. In this context, the term "and/or" encompasses all possible combinations of the listed elements, whether singly or in various combinations. The terms "first", "second", "third", etc., are used solely to differentiate between streams, elements, components, regions, layers, or sections and should not be interpreted as limiting the scope of the disclosure. These terms do not imply any particular sequence or order unless explicitly indicated by the disclosure. The term charcoal used herein is defined to include both charcoal and biochar.

To simplify the description of the disclosed invention, wood is described as an example of a cellulose- and lignin-containing material, whereby all bio-derived cellulose- and lignin-containing materials are included in the present invention.

The present disclosure pertains to a method and an apparatus for the energy efficient and continuous co-production of biogenic products from biomass, preferably cellulose- and/or lignin-containing material and the application of such produced biogenic products. Specifically, the present disclosure concerns a method 100 and a corresponding apparatus for, using biomass, preferably cellulose- and/or lignin-containing material as feedstock, the continuous co-production of at least two of the group of biogenic products comprising charcoal, CO₂ and/or BVOC for use of at least one of said group in heat and power production, metallurgical industry, agriculture, as fuel, as feedstock for the production of sustainable fuels and chemicals and/or for the use in CO₂ storage in geological structures.

The invention addresses the limitations of existing methods to produce biogenic products like charcoal, CO₂ and/or organic volatiles from biomass comprising cellulose- and/or lignin, by significantly advancing the production method of said biogenic products, whereby an efficient, scalable co-production of the said biogenic products is enabled. Further, the invention addresses the limitations of the metallurgical, agricultural, refinery, chemical, maritime, aviation, and heat and power industry towards efficient sourcing of sustainable feedstock such as biogenic carbon, charcoal, CO₂ and/or BVOC. The metallurgical industry includes the production of e.g., iron, steel, ferroalloy, ferrochrome, and silicon. Further, said biogenic products that are efficiently produced by the disclosed method 100 and the corresponding apparatus can be used in said industries and applications as feedstock and/or fuel enabling the efficient reduction of carbon intensity of operations and/or the carbon intensity of final goods produced.

An embodiment of the present disclosure of the method 100 and its corresponding apparatus for the co-production of charcoal, CO₂ and/or organic volatiles from cellulose- and/or lignin-containing material is schematically illustrated and indicated in Figure 1. Fig. 1 is the figure that best characterizes the invention for the abstract.

An embodiment of the present disclosure of the process step 9, that is the CO₂ separation step in the method 100 and said corresponding apparatus, is detailed and schematically illustrated as group 200 in Figure 2. Despite not being explicitly shown in Fig. 1 and Fig. 2, additional process configurations are included in the present invention. The present disclosure is described in detail the below.

The cellulose- and/or lignin-containing material that is used as feedstock is wood A. Preferably, the used wood grows fast, has a low ash and low phosphate content such as eucalyptus and blue gum wood. The bark and mechanical impurities are removed in the wood debarking unit 1.

The debarked heartwood AB is conveyed to a wood preparation unit 2 to reduce the size of the wood material. Remaining mechanical impurities are removed from the wood. Dust is separated (not shown) and can be used as fuel in combustion 6. This process step may include the extrusion or compacting of the wood material to achieve a homogeneous and uniform shape, preferably a particle-like form.

Another embodiment of the present disclosure is, instead of the example wood, the use of any other type of cellulose- and/or lignin-containing biomass such as grass, coconut shell, coconut mesocarp, agricultural waste, to produce charcoal, CO₂ and BVOC involving the disclosed method 100 and apparatus. Ideally, the used biomass is processed by means of e.g., separating, disintegrating and/or shredding and further processing as sieving, extrusion and/or compacting to achieve a homogeneous and uniform shape, preferably a particle-like form, prior to drying and carbonization of the biomass. The below described process steps of drying, carbonizing and cooling are preferably done in one reactor without mechanical separation of each step, but describes the different zones in the reactor where the drying and carbonization of the wood occurs and where the formed charcoal is cooled. Optionally, a mechanical separation of these zones is implemented and/or different reactors could be used for the individual process steps.

The prepared heartwood material AC is dried in the drying unit 3 at a temperature of 100-200°C. Typically, after drying the wood material AD has a moisture content of approximately 10-20%. Optionally, the drying step can be conducted in a separate reactor, such as a fluidized bed reactor, where the bed is formed by the particle-like wood material to be processed. Similarly, like in drum furnace carbonization, drying can occur in a separate drum furnace before the dried wood material is transferred to the carbonization drum furnace. Additionally, drying can be performed in reactors other than those used for carbonization. Alternatively, the drying step might be carried out as a pre-treatment process step in conjunction with a shaft furnace. The heat energy required for the drying is provided from combustion 6, and at least a part of the produced combustion flue gas is introduced in the drying 3 as circulation gas in a countercurrent principle through the wood burden. Drying the wood material is essential for achieving effective and thorough carbonization. If required, the dried material AD is screened to ensure that only particles of the desired size are provided to carbonization 4.

The dried heartwood material AD is further moved into the carbonization step 4 that characterized by comprising two sections (not indicated in figure 1). The first and smaller section of said carbonization 4 is physically integrated with the combustion 6, whereby a fuel stream D1, E2, AH, B, C2 and/or G2 is introduced and subsequently combusted in said integrated "combustion 6/carbonization 4" section providing direct heating in presence of the wood material AD. A defined stream H of produced O₂ from 9 is introduced to said integrated "combustion 6/carbonization 4" to enable the combustion that takes place with an O₂ deficit. A first part 11' of the hereby formed hot flue gas I1 is moved in a countercurrent principle through the wood material in the drying zone 3, while a second part 11" of the hot flue gas I1 is moved through the second and larger section of the carbonization zone through the carbonizing wood and/or forming charcoal burden. While 11" moves through carbonization 4, it is enriched with carbonization gas and stream D is formed, that is withdrawn from the second section of carbonization 4 and optionally recycled as stream D1 to said integrated combustion 6/carbonization 4.

The carbonization in the second section of carbonization 4 takes place in an atmosphere comprising less than 5 mol% O₂, preferably less than 1 mol% O₂, most preferably 0% O₂ content. Neither a flame nor combustion occurs inside the second section of the carbonization step 4.

An optional, alternative configuration comprises at least a part of the gases produced during the carbonization being introduced together with a stream of produced O₂ to carbonization, preferably introduced at the end (towards drying) of said second carbonization section where formed charcoal is present during the combustion, whereby the hereby formed hot gases are directed in a countercurrent principle through both the carbonizing and drying cellulose- and/or lignin-containing material. Another optional, alternative configuration comprises indirect heating of the carbonization and/or drying, whereby the combustion of said carbonization gases and/or other fuels takes place in the absence of wood and/or charcoal, whereby at least a part of the heated combustion gas is introduced to the carbonization and or drying step, but there is no flame or combustion occurring inside the wood material bed and/or charcoal bed itself. This indirect heating approach keeps the reactor atmosphere O₂-free while still delivering the high temperatures needed for pyrolysis and drying of said material. The present invention further comprises a combination of both direct and indirect heating of the carbonization 4 by the combustion 6, whereby the combustion 4 is optionally taking place in at least two separate reactors.

The cellulose- and/or lignin-containing material is carbonized between 270-950°C, more preferably between 350-700°C and most preferably between 400-600°C. The carbonization is a slow pyrolysis that is characterized by a heating rate between 0.01-10°C per second. The characteristics of charcoal produced during carbonization is significantly influenced by the final carbonization temperature and the heating rate of the carbonization process. Higher carbonization temperatures enhance the mechanical stability of the charcoal and reduce its volatile content, while achieving a higher BVOC yield. The carbonization step 4 can be performed in a continuously operating unit, such as a fluidized bed furnace, drum furnace, or shaft furnace as known from prior art. The carbonization 4 above c. 270°C starts becoming an exothermic decomposition of the wood material generating heat on its own above c. 350°C. During this stage, additional compounds like e.g., polycyclic aromatic hydrocarbons are released. Additional heat is provided by the combustion 6 through circulation gas as outlined below. The residence time of the wood in the retort is adjusted by varying discharge times, which depends on the moisture content of the wood feed.

The particle-like charcoal AE formed in carbonization 4 is conveyed to charcoal cooling 5 that applies indirect and/or direct cooling of the charcoal by a) heat depleted inert gases and/or water, preferably by using inert, cooled gas stream D, preferably stream E, most preferably stream D2. Optionally, liquid CO₂ is used for cooling during its vaporization. The cooled charcoal AF is withdrawn from the method 100, whereby the charcoal yield is at least 20 w%, preferably at least 25 w%, and most preferably 30 w% of dry matter of the cellulose- and lignin- containing material that is processed in method 100. The produced charcoal AF exhibits low volatiles, ash, sulphur and phosphorus content, and further exhibits a high fixed carbon content and a high mechanical strength. After the charcoal cooling 5 the cooled charcoal AF is optionally screened, compacted, briquetted and/or extruded before being applied as final product e.g., as reducing agent in metals, ferroalloys or metallurgic silicon production, in agriculture or as fuel.

The method steps of drying 3, carbonization 4 and cooling 5 are optionally separated by gas-locks, and these steps alternatively take place in different reactors. Through this, cross-contamination of process gases from each step with other gases is minimized. Furthermore, unwanted introduction of air to method 100 is avoided.

A first part D1 of the gaseous products D formed in carbonization reaction in step 4 is oxidized in the combustion step 6. The combustion temperature in the combustion 6 is controlled to ensure that the ash components do not melt. Optionally, solid ash components are removed from D1 before combustion in step 6 by e.g., a cyclone. The second part of the gaseous products D2 deriving from the carbonization 4, after solid components are optionally removed by e.g., a cyclone, is transferred to the vapor removal 7 to remove water and BVOC from the gas stream D2, before withdrawing water and BVOC as stream N from method 100. The ratio of the gaseous stream D1 versus stream D2 deriving from the carbonization 4 can be flexibly adjusted, with share of stream D2 ranging from 0 and 100%, depending on method requirements.

The combustion step 6 is done with an O₂ deficit, whereby gaseous, liquid and/or solid fuels are oxidized, preferably only gaseous fuels, whereby a gas phase concentration of said O₂ in the combustion 6 is between 10-50 mol%, preferably between 15-40 mol%, and most preferably between 20-35 mol%. Neither air is used in the combustion 6, nor is any air purposely introduced in method 100 and its corresponding apparatus. Produced O₂ stream H is applied in the combustion 6 and is provided by an O₂ supply source 9, whereby the O₂ purity is above 90 mol%, preferably above 95 mol% and most preferably above 99 mol%. The O₂ supply source 9 comprises a cryogenic air separation unit (ASU), a vacuum pressure swing absorption unit (VPSA), both ASU and VPSA separating O₂ from air, and/or an electrolyzer splitting water by electrolysis. Optionally, the O₂ unit 9 can be at a different location, whereby the oxygen H is supplied as liquid and/or gaseous O₂.

The O₂ concentration in the combustion step can be flexibly adjusted to control the combustion temperature. Optionally (not shown in Fig. 2), the combustion is done in two subsequent stages with a first part of produced O₂ introduced in stage 1 and a second part of produced O₂ introduced in stage 2. Optionally, the method 100 comprises two separate combustion units, the first unit for heating of the carbonization, and the second unit for the generation of steam, whereby the second combustion is done in a steam boiler (not shown), whereby the generated steam is optionally at least in part used in a steam turbine to produce electric power and/or to drive a gas compressor, preferably for the compression of a CO₂ containing gas stream in CO₂ separation step 9, most preferably for the compression of the gas stream E1. Alternatively, steam and/or generated electric power are withdrawn from method 100 (not shown). Optionally, the optionally generated steam is used to heat the drying 3 and/or combustion 4.

The combustion step 6 generates heat by the combustion of streams D1, E2, AH, B, C2 and/or G2, whereby optionally, at least a part of that heat is used to indirectly heat the carbonization unit 4 and/or drying 3. Optionally, externally sourced fuels of biogenic origin can be used in combustion 6 such as e.g., biogas, biofuels, BVOC, solid biomass, whereby method 100 converts additional biogenic carbon to CO₂. Combustion 6, preferably integrated with the first section of carbonization 4, directly heats the wood material. Combustion 6 produces an O₂-free, hot flue gas stream I, thereof at least a part I1 is used as circulation gas and heat source and that is introduced as stream 11' to the drying 3 and/or as stream 11" to carbonization 4. A second part I2 is optionally processed in the vapor removal step 7. The ratio of stream I1 versus stream I2 can be flexibly adjusted, with share of stream I2 ranging from 0 and 100%, depending on method requirements. The ratio of stream I1' versus stream I2' can be flexibly adjusted, with share of stream I2" ranging from 0 and 100%, Streams C2, E2, G2 and/or F2 are optionally preheated before optionally entering the combustion 6 in e.g., charcoal cooling 5. Optionally, the required O₂ for the combustion of gases, liquids or solids is injected as pure oxygen in the combustion 6 without prior blending with e.g., recycled CO₂.

A first part C1 of stream C deriving from drying 3, stream D2 deriving from carbonization 4, and stream I2 deriving from combustion (6) are transferred to the vapor removal step 7 comprising at least a condenser and a gas/liquid separator to remove stream N, comprising water and/or BVOC, from the gas streams C1 and D2. Optionally, each stream C1, D2 and/or I2 is processed in an individual vapor removal unit (not shown). In case of the individual vapor removal from streams C1, D2 and/or I2, stream N comprises two or three different and separate streams that are not shown. Stream N is withdrawn from method 100 and/or (not shown) is optionally used as fuel in the combustion 6. The second part C2 of stream C is used in combustion 6. The ratio of stream C1 versus stream C2 can be flexibly adjusted, with share of stream C2 ranging from 0 and 100%, depending on method requirements.

Optionally, streams D2 and/or I2 are processed in a water-gas shift (WGS) step (not shown) to convert contained carbon monoxide into CO₂ and H₂. The hereby generated H₂ is optionally separated by PSA or membrane and can optionally be withdrawn from method 100. Potential contaminants generated in carbonization 4 and/or combustion 6, such as e.g., nitroxides (NOₓ) or sulfur oxides (SOx), are optionally removed from the process prior to the said optional WGS, or in the CO₂ separation step 9 using state-of-the-art technology. Sulfur compounds are e.g., oxidized, preferably catalytically, and are hereby converted to sulphur dioxide that can be effectively separated from CO₂. Potential catalyst poisonous contaminants are optionally removed using prior art such as e.g., a guard bed.

The first part E1 of the gas stream E from vapor removal 7 is transferred to the CO₂ separation step 8 that separates CO₂ cryogenically. Method 100 step 8 comprises group 200 of method steps as indicated in Figure 2. A first part F1 of separated CO₂ from the CO₂ separation 8 is withdrawn from method 100, and CO₂ stream F1 is used e.g., as feedstock for a downstream chemical conversion to e.g., sustainable methanol, aviation fuel, diesel, etc. Alternatively, stream F1 is injected and permanently stored in a geological structure. Optionally, a second part F2 of the produced CO₂ from step 8 is recycled and used in combustion 6 as inert dilutant to adjust the oxygen concentration of the gas phase reacting in the combustion 6. The ratio of stream F1 versus stream F2 can be flexibly adjusted, with share of stream F2 ranging from 0 and 100%, depending on method requirements. Stream G from the CO₂ separation 8 contains at least CH₄, H₂ and/or CO and a first part G2 is optionally used as fuel gas in combustion 6, while a second part G1 is optionally withdrawn from method 100 to be used e.g., for the production of sustainable products such as methanol, diesel, naphtha and aviation fuel, or is used as reduction agent in metallurgic processes. The ratio of stream G1 versus stream G2 can be flexibly adjusted, with share of stream G2 ranging from 0 and 100%, depending on method requirements. The second part E2 of the gas stream E from vapor removal 7 is recycled and used to moderate the O₂ concentration in combustion 6. The ratio of stream E1 versus stream E2 can be flexibly adjusted, with share of stream E2 ranging from 0 and 100%, depending on method requirements. CO₂ containing streams D1 and/or F2 are optionally used to adjust the oxygen concentration in the combustion step 6, and hence, used to moderate the combustion temperature. Gas stream G2 is optionally treated in a nitrogen removal unit (not depicted) to remove nitrogen from the method 100, whereas the nitrogen removal unit applies a cryogenic, membrane and/or pressure swing absorption technology, before stream G2 used as fuel gas in the combustion 6.

Bark stream AG from wood debarking 1 is processed in bark preparation 10 to reduce water content and/or to reduce particle size, then transferred as stream AH to combustion 6. The dust B deriving from the wood drying 3 and from wood preparation 2 (stream not shown) is used as fuel in the combustion 6.

Optionally, drying 3, carbonization 4 and cooling 5 are done within a combined unit, whereby the drying, carbonization and cooling zones are optionally mechanically separated by e.g., a gas lock from each other.

The gas streams C, D, I, and subsequently further E contain less than 30 mol% of nitrogen (N₂), since N₂ introduction to method 100 is limited to either N₂ impurities in the produced O₂ and/or by air undesirably entering method 100 while e.g., charging the apparatus with cellulose- and/or lignin-containing material or while discharging the charcoal. In the present disclosure, no air stream is actively injected or purposely allowed to enter the system, in contradiction to the state-of-the-art charcoal production methods utilizing ambient air to provide O₂ for the combustion. The low nitrogen content and the high concentration of CO₂ in the stream E1 enable the efficient use of a cryogenic CO₂ separation instead of the conventional absorption-, amine-based CO₂ separation.

The method 100 illustrates and indicates the corresponding apparatus for the continuous co-production of at least two of the group of biogenic products comprising charcoal, CO₂ and/or BVOC and both method 100 and said apparatus are included in the present invention.

In Figure 2, the cryogenic CO₂ separation process step 8 of the method 100 and its corresponding apparatus, according to an embodiment of the invention is detailed and schematically illustrated and indicated with the group 200 of method steps. The individual process steps within CO₂ separation 8 are known from prior art, but their combination and specific order, combined with the comprehensive heat integration results in an optimized, overall energy efficiency of said CO₂ separation that may be considered as novel and innovative.

The group 200 generally comprises forming a fraction predominantly or exclusively containing CO₂. In the group 200 of method steps, the starting gas mixture E1 comprises at least in part CO₂. A recycling stream P explained below is optionally added to stream E1 to form the starting gas mixture. In the group 200, the starting gas mixture of E1 and P is enriched in CO₂ and depleted in potential impurities like e.g., sulphur dioxide and water in a first group 20 of method steps forming an intermediate gas mixture J, the first group 20 of method steps including compressing 21a, cooling 21b, condensing 22 and drying 23. The intermediate gas mixture J is at least partially submitted to a second group of method steps 30, said group 30 of method steps including a partial gas liquefaction by refrigeration in 31 and/or 32, and a liquid/gas separation 33 as further explained below.

The first group 20 of method steps includes subjecting the starting gas mixture to at least one compression step 21a, optionally with at least 1 step intercooling 21b. Condensates formed in this compression step 21a are not shown here for reasons of conciseness, and the first compression step 21a and the optional intercooling 21b are shown as a common block 21a, 21b. The compression 21 is optionally performed in multistage compression with intermediate cooling.

At least a part of the compressed gas EP remaining after the compression 21a and the optional intercooling 21b is subjected to a cooling step 22 forming further condensate (not shown). At least a part of the remaining gas EQ is subjected to a drying step 23, obtaining a dried gas mixture, and at least a part of the dried gas mixture is used as the intermediate gas mixture J which is subjected to the second group 30 of method steps.

Steps 31 and/or 32 comprise cooling of stream J, whereby refrigeration step 31 is optionally combined with a compression step, followed by a further refrigeration step 32 of stream J' deriving from 31 to form J", preferably subcooling stream J' in 32, and a gas/liquid separation of stream J" in step 33. Ultimately, by refrigerating 31 and/or 32, a liquid, CO₂-rich fraction K and a gaseous fraction L are formed that are separated in 33. Stream K is further processed through a heat exchanger 35 resulting in stream K'.

The liquid fraction K' is, in the example shown, processed in a rectification column 40, forming a liquid, CO₂ rich stream R and a gaseous, CO₂ depleted stream M. The stream M is subjected to a condensing and a gas/liquid separation in step 41, whereby a liquid, CO₂ rich stream N and a gaseous, CO₂ depleted stream O are produced. Stream N is subjected to rectification in column 40. In the example shown, streams L and O are merged to LO and are used for cooling in steps 31 and/or 32, and further optionally used for cooling in the cooling step 22.

The gaseous stream LO' is subjected to a physical absorption step 42, comprising a molecular sieve-based PSA, a membrane and/or a solvent-based wash, preferably a PSA step, whereby step 42 produces a higher polar fraction as the recycle stream P comprising CO₂ and a less polar fraction G comprising at least CH₄, CO and/or H₂, and G being withdrawn from group 200 of method steps. The physical absorption step 42 can be embodied as known from the art, particularly including a regeneration system. A mole sieve or methanol solvent may be used therein.

A first part R1 of the liquid stream R, predominantly or exclusively containing CO₂, is used for cooling in refrigeration steps 31 and/or 32, and the subsequent stream R1' is subjected to be processed in the rectification column 40. Streams R1', K' and N are processed in rectification step 40, preferably entering the column at different tray levels. The second part R2 of the liquid stream R is further cooled in step 43, preferably by expansion, to form liquid stream R2', and optionally stored in a liquid CO₂ tank 44. Boil-off gas S from 44 is optionally recycled and preferably blended with stream LO', ideally S is mixed with stream F2 (not shown). Liquid CO₂ stream F from tank 44 is at least as a first part withdrawn as stream F1 from group 200 of method steps, and subsequently from method 100. A second part F2' of liquid CO₂ stream F is transferred to vaporization step 45 and converted into a gaseous stream F2, that is withdrawn from group 200 of method steps. Optionally, the liquid CO₂ stream F2' is vaporized, whereby step 45 is heat integrated with charcoal drying 3 from method 100. Optionally, streams F1 and/or F2 are used for cooling in group 20 and/or group 30. Optionally, F1 is withdrawn from group 200 as liquid CO₂. Preferably, the liquid CO₂ stream F1 withdrawn from group 200 is subjected to a pressurized vaporization step (not depicted), whereby F1 is vaporized under pressure, preferably applying a diaphragm type (positive displacement) pump to transfer the liquid CO₂ into the vaporizer. The processing/vaporization of stream F1 is heat-integrated with group 20, group 30 and/or step 35. Optionally, F1 is heated in the pressurized vaporization step using e.g., steam or ambient air, and/or hot charcoal in cooling step 5. As the temperature of F1 increases, this stream becomes gaseous and pressure builds up efficiently. Preferably, the CO₂ stream F1 is hereby withdrawn from group 200 at pressure of 85 bara and with a temperature of e.g., 10°C, and can be readily utilized for a chemical conversion without additional need of further compression. Optionally, pressurized vaporization is applied to stream F2', whereby the resulting pressurized, gaseous stream F2 is optionally expanded, preferably using an expansion turbine, before withdrawing from group 200. Permutations, other combinations or integration options of the above-described process steps within the CO₂ separation 8 are contained in this invention.

As another embodiment of this invention a less preferred amine-based CO₂ separation process is applied for separation of CO₂ in step 8. As another embodiment of this invention, the CO₂ separation 8 can also comprise a combination of the cryogenic CO₂ separation with a physical solvent gas treating process, applying methanol as absorbent, to maximize CO₂ yield.

As another embodiment of this invention, comprehensive heat integration of the various process steps of method 100 is implemented to enhance its energy efficiency. Furthermore, method steps of group 200 are heat integrated to reduce the cooling demand for the CO₂ separation step 8 of method 100. Further cooling within said CO₂ separation 8 is done using ammonia and/or CO₂ chillers, preferably cooling within group 30 of method step in group 200 is done by a combination of ammonia and CO₂ chillers. Preferably, subcooling is applied in the gas/liquid separation step 41 in group 200 using an ammonia chiller. Both ammonia and CO₂ chillers are known from prior art.

In state-of-the-art charcoal production air is used in the process to provide the required O₂ for carbonization and combustion, whereby the process gases are significantly diluted with inert nitrogen contained in said air. The disclosed method 100 and its corresponding apparatus benefit from the substitution of air (for the provision of O₂) by exclusively utilizing produced O₂ from 9 that is used in combustion 6. Hereby, none of the gas streams in method 100 are diluted with inert nitrogen.

The significant improvements that are achieved by the disclosed invention are summarized in the following:
- The disclosed method 100 and its corresponding apparatus for the continuous co-production of at least two biogenic products of the group of charcoal, CO₂ and BVOC, whereby produced O₂ is applied in the combustion 6 of biogenic compounds, herewith excluding the introduction of nitrogen and thereby avoiding the dilution of produced or recycled CO₂ comprising streams, leverages on significant synergies. The synergies result in the maximized overall carbon yield, combined with a significantly enhanced energy efficiency.
- In method 100, the gas stream E1 from vapor removal step 7 comprises CO₂ concentrations higher than 30 mol%, and surprisingly this makes the cryogenic CO₂ separation process more beneficial than a conventional, physical absorbent-based CO₂ separation. The disclosed method 100 and its corresponding apparatus comprising the cryogenic CO₂ separation is characterized by a significantly improved energy efficiency, characterized by a specific duty of only 280 kW/t CO₂ (Example 2) compared to the conventional absorbent-based method with a specific duty of 1,354 kW/t CO₂ (Example 1). Another advantage of the disclosed method 100 and its corresponding apparatus (Example 2) is the generation of 181 kg/h of a valuable fuel gas stream G (stream G1 in Example 2) comprising a significantly increased caloric value of 32.2 MJ/kg and 36.0 MJ/m³ compared to the caloric value of the fuel gas stream AM12 with 4.3 MJ/kg and 3.7 MJ/m³ that is generated at a flow rate of 1,349 kg/h by utilizing the conventional air-based pyrolysis method in combination with a physical absorbent-based CO₂ separation (Example1). While yielding the same charcoal volume of 900 kg/h and almost the same liquid CO₂ volume of 439 kg/h (Example 1) versus 436 kg/h (Example2), the disclosed method 100 and its corresponding apparatus produces a valuable fuel gas stream G (stream G1 in Example 2) that can efficiently be utilized to produce thermal power of 1.62 MWₜₕ. Theoretically, the produced fuel gas stream AM12 (Example 1) deriving from the method using the conventional air-based charcoal production process can produce the same thermal power. However, the fuel gas AM12 is too lean with a caloric value of 3.7 MJ/m³ to be practically utilized for e.g., heat and power production using standard equipment.
- Further, since no air-based O₂ source is applied and hence, no dilution of process gases with nitrogen occurs in method 100, the absolute volume of processed gases for e.g., the CO₂ separation is significantly reduced by a factor of 3, allowing to build the process plant smaller, whereby capital demand is reduced. While the disclosed method 100 (Example 2) processes only 447 Nm³/h of feed gas to the CO₂ separation yielding 436 kg/h of liquefied CO₂, the conventional air-based method (Example 1) processes 1,357 Nm³/h of feed gas to the CO₂ separation yielding almost the same volume of liquefied CO₂ with 439 kg/h. The air-based charcoal production method uses air in the combustion and hence, a significant volume of nitrogen is present in the feed gas to the CO₂ separation, resulting in an increase of the volume flow to the CO₂ separation by a factor of 3.1 compared to the disclosed method 100.
- Furthermore, the heat generation efficiency of combustion 6 is significantly increased. Inert nitrogen is not present during combustion, and is optionally replaced by at least a part of recycled CO₂ to moderate the flame temperature. CO₂ has a significantly lower heat capacity of cₚ = 0.846 kJ/kg·K compared to N₂ with a heat capacity of cₚ = 1.04 kJ/kg·K, resulting in the reduction of caloric energy required to heat the gas composition. This results in less fuel consumption of method 100 since the heating of the process gases during combustion 6 is more efficient compared to the prior art methods.

- Another benefit of the disclosed method 100 and its corresponding apparatus applying produced O₂ for combustion in step 6 within a charcoal production process derives from the flexible and efficient adjustment of the concentration of produced O₂ that is present during the combustion 6, whereby more control about the combustion process is gained. E.g., increasing the O₂ concentration results in an increased combustion temperature. Efficient control of the combustion temperature allows directly controlling the heat flow to the carbonization 4.
- Another advantage of the disclosed method 100 and its corresponding apparatus is the greatly achieved absence of environmentally harmful nitrogen oxides (NOₓ). Due to the absence of nitrogen in combustion 6, formation of NOₓ is greatly reduced. As a result, corrosion risk and environmental impact are reduced, and process gas treatment is simplified compared to the prior art. Furthermore, a more efficient CO₂ separation 8, avoiding the need for the NOₓ removal, can be designed.

The above-mentioned advantages also apply to the disclosed apparatus as described above in detail for producing at least one of the group of biogenic products charcoal, CO₂ and/or BVOC, whereby said products are produced from bio-derived cellulose- and/or lignin-containing material, said apparatus comprises at least the following process units:
- a CO₂ separation unit 8 that separates CO₂ from a gas stream, whereby the CO₂ is formed in the combustion 6 and/or the carbonization 4 and whereby the unit 8 comprises at least compressing and cooling 21, condensing 22 and drying 23 in a group 20 of method steps, and refrigeration 31 and/or 32 with partial gas liquefaction, and rectification 40.
- a carbonization unit 4 for converting the dried cellulose- and/or lignin-containing material to charcoal, whereby the carbonization 4 is least in part directly and/or indirectly heated by the combustion 6, whereby said combustion 6 is preferably combined with said carbonization 4 and whereby dried cellulose- and/or lignin-containing material being formed in drying 3 is present while gases are combusted, and whereby at least a part of the heated flue gas from combustion 6 is passed through the carbonization 4 with less than 5 mol% O₂, preferably with less than 1 mol% O₂, most preferably with 0% O₂ content, and
- a combustion reactor unit 6 that is operated with an oxygen deficit, whereby gaseous, liquid and/or solid fuels are oxidized, and whereby O₂ is exclusively provided as produced O₂, and whereby a gas phase concentration of said O₂ in the combustion 6 is between 10-50 mol%, preferably between 15-40 mol%, and most preferably between 20-35 mol%.

Furthermore, the above-mentioned advantages also apply to the disclosed method 100 for the continuous co-production of at least two biogenic products of the group of charcoal, CO₂ and BVOC, whereby the said charcoal is produced by the method 100 to be used in production of metals, preferably to be used in the production of iron, ferroalloys and/or ferrochrome as reduction agent and/or to achieve a specific carbon content in a metal product, furthermore said charcoal produced by method 100 to be used in the production of metallurgic silicon as reduction agent, and whereby the products CO₂ and BVOC are produced by the disclosed method 100 to be used as educts in the production of hydrocarbons, preferably to be used in the production of naphtha and fuels, most preferably to be used in the production of methanol, diesel and aviation fuel, and whereby the charcoal is produced by the method 100 to be used in agriculture, and whereby the charcoal and/or BVOC produced by the method 100 to be used as fuel, and whereby the biogenic CO₂ produced by the method to be used for injection into geological structures, whereby said products charcoal CO₂ and/or BVOC are continuously produced from bio-derived cellulose- and/or lignin-containing material, said method (100) comprising at least the following steps of
- separating CO₂ 8 from a gas stream, whereby the CO₂ is formed in a combustion 6 and/or a carbonization 4, whereby said combustion 6 is preferably combined with said carbonization 4 and whereby dried cellulose- and/or lignin-containing material being formed in drying 3 is present while gases are combusted, and whereby at least a part of the separated CO₂ from CO₂ separation 8 is withdrawn from method 100,
- converting dried cellulose- and/or lignin-containing material to charcoal in the carbonization 4, whereby a gas stream is introduced to the carbonization 4 with less than 5 mol% O₂, preferably with less than 1 mol% O₂, most preferably with 0% O₂ content,
- operating the combustion 6 with an oxygen deficit, whereby gaseous, liquid and/or solid fuels are oxidized, and whereby O₂ is exclusively provided as produced O₂, and whereby a gas phase concentration of said O₂ in the combustion 6 is between 10-50 mol%, preferably between 15-40 mol%, and most preferably between 20-35 mol%,
- whereby said oxygen for combustion 6 is produced in an O₂ production 9 by at least one of the following methods comprising cryogenic air separation, vacuum pressure swing absorption and water electrolysis, and whereby the said produced O₂ has a purity of at least 90 mol%, preferably at least 95 mol%, most preferably at least 99 mol%.

Charcoal that is produced according to the disclosed method 100 provides the advantage, that, due to the more energy efficient nature of the disclosed method 100 and its corresponding apparatus, the resulting production cost for biogenic charcoal is significantly reduced. Thereby, the disclosed use of said charcoal in the metal industry allows to produce decarbonized metals including ferroalloys, ferrochrome and/or metallurgic silicon at lower cost. Further, the disclosed use of said charcoal in agriculture becomes more affordable. Due to the scalability of the disclosed method 100 and its corresponding apparatus for production of biogenic charcoal, corresponding supply of charcoal to the metal industry and the agricultural sector becomes significantly debottlenecked. Further, the disclosed method 100 results in high-quality charcoal exhibiting a low content of ash, sulphur and phosphorus, sufficient mechanical strength and/or low volatiles content, and said charcoal effectively replaces fossil products in the metallurgic industry for the production of metals including e.g., ferroalloys, metallurgic silicon fulfilling high-quality standards.

Biogenic CO₂ and/or BVOC that are produced according to the disclosed method 100 provide the advantage, that, due to the more energy efficient nature of the disclosed method 100 and corresponding apparatus, the resulting production cost for said CO₂ and/or BVOC are significantly reduced. Thereby, the disclosed use of said CO₂ and/or BVOC in the production of sustainable hydrocarbons such as e.g., methanol, diesel and/or aviation fuel becomes more cost efficient. The scalability of method 100 and its corresponding apparatus for the production of CO₂ and/or BVOC enables scaled supply of said products CO₂ and/or BVOC to the chemical, fuel and refinery industry. The features disclosed in the foregoing description, in the claims and/or drawings may, both separately and in any combination thereof be material for realizing the invention in diverse forms thereof.

### EXAMPLE 1

This hypothetical example, also referred to as "Conventional Air Case", is based on a continuous Lambiotte CISR 6000 carbonization retort known from prior art. Hypothetical process details are listed in table 1. The process is operated in a conventional way and ambient air is used to provide oxygen for combustion. 3.55 tph of wood comprising 25% humidity are used as feedstock. Charcoal is produced at a rate of 0.9 tph representing a yield of 33,8% based on wood dry matter, whereby the charcoal has a fixed carbon content of 80-85%.

The carbonization temperature of 550°C is achieved by the joint combustion of a) a first part of the gases produced by carbonization and extracted from bottom of carbonization, and b) 100% of the gas formed from drying the wood, whereby these two streams are introduced together with 1,197 Nm³/h of ambient air to the top part of the carbonization zone of the retort, whereby the combustion takes place with an oxygen deficit in presence of the wood material. Hereby the combustion is physically integrated with the top part of the carbonization. The hereby formed hot gases are directed both upwards the retort to dry the wood burden in the above drying zone as well as downwards the retort to heat the carbonizing wood and hereby forming charcoal in the lower carbonization zone. The produced gas from the wood drying stage comprises at least biogenic volatile organic compounds (BVOCs) and is collected at the top of the retort, and that stream is entirely used as fuel gas in said integrated combustion. Further, the carbonization gas formed in the carbonization reaction is withdrawn from the bottom of the retort's carbonization zone and a first part (carb. gas 1) of that carbonization gas is utilized as fuel gas in said integrated combustion. The combustion of both fuel gases provides the required heat energy for the carbonization/pyrolysis process.

The second part (carb. gas 2) of said carbonization gas that is withdrawn from the bottom of the retort's carbonization zone is cooled down to remove water vapor using a vapor removal stage, whereby stream AM1 is formed at a flow rate of 1,357 Nm³/h. Stream AM1 is the starting gas composition to concentrate and liquify the contained CO₂. Stream AM1 is processed in an amine-based carbon capture (CO₂ separation) system as known from the prior art, applying air cooling to reduce the solvent temperature after the CO₂ desorption step. The physical absorbent used is OASE^{®} white from BASF^{®}. Stream AM1 comprises 16.2 mol% CO₂ and 67.6 mol% nitrogen. Said amine-based CO₂ separation provides a CO₂ product stream AM2 comprising 99.98 mol% CO₂ at a flow of 433 kg/h, and a stream AM12 with a caloric value of 4.3 MJ/kg or 3.7 MJ/m³ at a flow rate of 1,349 kg/h (Table 2).

**Table 1: Summary of process parameters and product yields of Examples 1 and 2**

| | | **Example 1** | **Example 2** |
|---|---|---|---|
| **Retort** | Wood feedstock (kg/h) | 3,550 | |
| | Water content (%) | 25 | |
| | Dry wood (kg/h) | 2,663 | |
| | Carbonization temperature (°C) | 550 | |
| | Carbonization gas to combustion (%) | 100 | |
| | Air to combustion (Nm³/h) | 1,197 | N/A |
| | Produced O₂ to combustion (Nm³/h) | N/A | 251 |
| **CO₂ separation & liquefaction** | *Specific heat duty (kW*/*t CO₂)* | *1,134* | *N*/*A* |
| | *Specific electrical duty (kW*/*t CO₂)* | *220* | *280* |
| | Total specific duty (kW/t CO₂) | 1,354 | 280 |
| **Products** | Charcoal (kg/h) | 900 | |
| | Liquid CO₂ (kg/h) | 439 | 436 |

The CO₂ stream AM2 is liquified, and an advanced liquefaction is used in this example comprising the following steps. Stream AM2 is cooled, followed by a condensate removal and compression step to conclude stream AM3. AM3 is cooled and blended with boil-off gas AM15 from the liquid CO₂ tank before condensate removal and compression to provide stream AM4. Stream AM4 is processed through a multistage cooling to result in stream AM5 that is dried to result in stream AM6. Stream AM6 is cooled using a CO₂ reboiler that uses stream AM13 for cooling, whereby stream AM6 becomes stream AM7. AM7 is processed in a stripper column resulting in streams AM8 and AM16. AM16 is treated in a condenser and liquid gas separation step, whereby the two streams AM17 and AM18 are formed. AM17 is directed back into said stripper column, while stream AM18 that is vented. Stream AM8 is separated into the two streams AM9 and AM13. AM13 is used for cooling stream AM6, and the resulting stream AM14 is further directed to said stripper column. Streams AM7, AM14 and AM17 are processed in said stripper column. Stream AM9 is expanded and hereby cooled to form stream AM10 that is stored in the liquid CO₂ storage tank. Stream AM11 is withdrawn as CO₂ product stream AM11 from the tank. The process of this theoretical example 1 is simulated using Honeywell's process simulation software, UniSim R491, and selected characteristics of the above-described streams are listed in Table 3. The specific heat duty of the amine-based CO₂ separation is 1,134 kW/t CO₂, the specific electrical duty of the CO₂ liquefaction is 220 kW/t CO₂, resulting in a total duty of 1,354 kW/t CO₂ being separated and liquefied at 439 kg/h.

**Table 2: Gas compositions, flow rates and heating value of selected streams "Conventional Air Case"**

| **Gas composition** | **Flue Gas** (AM1) | | **CO₂ Product** (AM11) | | **Fuel Gas** (AM12) | |
|---|---|---|---|---|---|---|
| | (w%) | (mol%) | (w%) | (mol%) | (w%) | (mol%) |
| CO₂ | 24.4 | 16.2 | 99.95 | 99.98 | 0.0 | 0.0 |
| CO | 3.9 | 4.0 | 0.0 | 0.0 | 5.2 | 4.9 |
| H2 | 0.0 | 0.2 | 0.0 | 0.0 | 0.0 | 0.2 |
| CH₄ | 5.6 | 10.2 | 0.0 | 0.0 | 7.6 | 12.5 |
| H₂O | 1.1 | 1.8 | 0.0 | 0.0 | 0.0 | 0.0 |
| N₂ | 64.9 | 67.6 | 0.0 | 0.0 | 87.2 | 82.4 |
| Flow rate (Nm³/h) | 1,357 | | 1,667 | | 1,142 | |
| Flow rate (kg/h) | 1,778 | | 3,272 | | 1,349 | |
| Caloric value (MJ/kg) | | | | | 4.3 | |
| Caloric value (MJ/m³) | | | | | 3.7 | |

**Table 3: Characteristics of the streams described in Example 1 "Conventional Air Case"**

| ***STREAM*** | **AM1** | **AM2** | **AM3** | **AM4** | **AM5** | **AM6** | **AM7** | **AM8** | ***AM9*** |
|---|---|---|---|---|---|---|---|---|---|
| Vapour Fraction | 1 | 1 | 1 | 1 | 1 | 1 | 1 | 0 | 0 |
| Temperature (°C) | 40.0 | 55.0 | 150.2 | 214.1 | 8.9 | 8.9 | -5.6 | -20.3 | -20.3 |
| Pressure (bar) | 1.3 | 1.2 | 4.8 | 21.0 | 20.5 | 20.5 | 20.5 | 19.1 | 19.1 |
| Molar Flow (Nm³/h) (gas) | 1357 | 224 | 226 | 246 | 244 | 244 | 244 | 253 | 240 |
| Mass Flow (kg/h) | 1778 | 439 | 441 | 480 | 479 | 478 | 478 | 497 | 472 |
| Std Ideal Liq Vol Flow (m³/h) | | 0.53 | 0.53 | 0.58 | 0.58 | 0.58 | 0.58 | 0.60 | 0.57 |
| Heat Flow (kW) | | -3.91E+06 | -3.90E+06 | -4.22E+06 | -4.29E+06 | -4.29E+06 | -4.30E+06 | -4.62E+06 | -4.39E+06 |

| ***STREAM*** | **AM10** | **AM11** | **AM12** | **AM13** | **AM14** | **AM15** | **AM16** | **AM17** | **AM18** |
|---|---|---|---|---|---|---|---|---|---|
| | 0 | 0 | 1 | 0 | 1 | 1 | 1 | 0 | 1.0 |
| Temperature (°C) | -25.8 | -25.8 | 3.3 | -20.3 | -20.3 | -45.7 | -20.8 | -28.0 | -28.0 |
| Pressure (bar) | 16.0 | 16.0 | 0.1 | 19.1 | 19.1 | 4.6 | 19.0 | 19.0 | 19.0 |
| Molar Flow (Nm³/h) (gas) | 240 | 220 | 1142 | 13 | 13 | 20 | 262 | 259 | 3 |
| Mass Flow (kg/h) | 472 | 433 | 1349 | 25 | 25 | 39 | 513 | 507 | 6 |
| Std Ideal Liq Vol Flow (m³/h) | 0.57 | 0.52 | | 0.03 | 0.03 | 0.05 | 0.62 | 0.61 | 0.01 |
| Heat Flow (kW) | -4.39E+06 | -4.03E+06 | | -2.31E+05 | -2.24E+05 | -3.53E+05 | -4.60E+06 | -4.70E+06 | -4.92E+04 |

### EXAMPLE 2

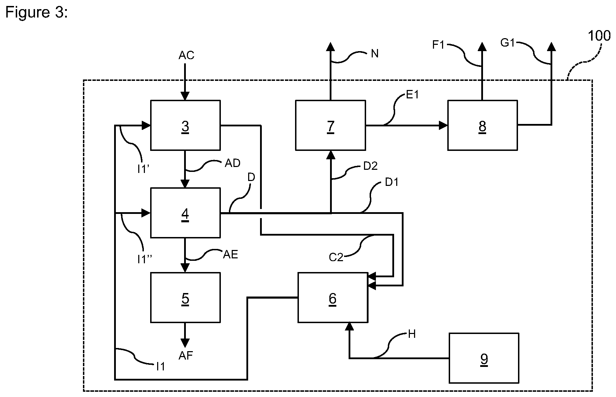

Example 2 is hypothetical and refers to the "Produced Oxygen Case" that is based on a modified continuous Lambiotte CISR 6000 carbonization retort known from prior art. Referring to Figure 3 that schematically reflects and indicates a simplified flow chart of Figure 1, as well as referring to figure 2, the applied method is outlined in the following: 3.55 tph of wood material AC comprising 25% humidity are dried in 3 to form dried wood AD that are further converted to hot charcoal AE in the carbonization 4 before cooling AE to ambient temperature in cooling 5 to form final charcoal product AF at a rate of 0.9 tph representing a yield of 33,8% based on wood dry matter, whereby the charcoal has a fixed carbon content of 80-85%.

Table 1 summarizes the hypothetical process details of the Produced Oxygen Case. The process is operated by using produced oxygen stream H with a purity of 99.99% to the combustion for heating the retort, whereby no air is introduced to method 100. Other operational parameters of the modified Lambiotte CISR 6000 are kept the same as in example 1, and deviations are indicated below.

The dried wood material AD is moved into the carbonization step 4 that characterized by comprising two sections (not indicated in figure 3). The first and smaller section of said carbonization 4 is physically integrated with the combustion 6, whereby fuel gas streams D1 and C2 are introduced and subsequently combusted in said integrated "combustion 6/carbonization 4" section to directly heat the carbonization 4 in presence of the wood material AD. Fuel gas stream C2 comprises 100% of gas stream C formed in drying 3. A stream H of produced O₂ from 9 is introduced to said integrated "combustion 6/carbonization 4" with a flow rate of 251 Nm³/h to enable the combustion that takes place with an O₂ deficit. 100% of the hereby formed hot flue gas I1 from said combustion 6 is used within the retort for indirect heating: a first part of the hot flue gas 11' is moved upwards in a countercurrent principle through the wood material in the upper drying zone 3, while a second part I1" of the hot flue gas I is moved downwards through the second and larger section of the carbonization zone comprising the carbonizing wood AD and forming charcoal AE in the lower carbonization zone. The carbonization temperature is 550°C. While the second part I1" of the hot flue gas moves through the carbonization 4, it is enriched with forming pyrolysis/carbonization gases and stream D is formed. Stream D is withdrawn from the bottom of the second section of carbonization 4.

A first part D1 of the formed carbonization gas D is recycled to said integrated combustion 6 and subsequent carbonization 4. The second part D2 of the formed carbonization gas is treated in a vapor separation step 7 for the removal of contained vapors forming stream N. 100% of the formed CO₂-rich gas stream E1, deriving at a flow rate of 447 Nm³/h from the vapor removal 7, is processed in a cryogenic CO₂ separation 8. The CO₂ separation 8 concentrates and liquefies the CO₂ with a purity of 99.99 mol% and a flow rate of 3,248 kg/h that is withdrawn as stream F1 from the method 100.

The flow rate ratio of the first part D1 versus the second part D2 of the carbonization gas D in this Example 2 is exactly the same flow rate ratio of the "carb. gas 1" versus the "carb. gas 2" in Example 1. The corresponding same percent-share of carbonization gas flow (like "carb gas 2" in Example 1) is processed as stream D2 in the vapor separation 7 to form stream E1, that is referred to as "CO₂ rich stream" in Table 4.

In the following, the gas streams E1 and AM1 are compared: eliminating the contained 67.6 mol% nitrogen (N₂) in stream AM 1 of example 1 (Table 2), the flow rate and its composition compares exactly to the CO₂-rich Stream E1 (Table 4). It is assumed, that both the examples 1 and 2 produce the same composition of carbonization gas in their corresponding carbonizations, with the difference that the conventional air case (example1) additionally contains the N₂ introduced by the utilized air in combustion, as indicated in table 2. Said utilized air comprises 87.08 mol% N₂, 20.95 mol% O₂ and 0.97 mol% balance of rare gases, whereby that rare gases are not considered in the gas composition of example 1.

In the hypothetical example 2, the flow rate of stream E1 is 447 Nm3/h that is processed in the cryogenic CO₂ separation step 8. Step 8 is detailed in the following, while referring to figure 2. The individual process steps within CO₂ separation 8 are known from prior art, but their specific combination and order, combined with the comprehensive heat integration results in an optimized, overall energy efficiency of said CO₂ separation that may be considered as novel and innovative. The recycling stream P explained below is added to stream E1 to form the starting gas mixture that is compressed in steps 21a and 21b, whereby step 21b comprises additional intercooling to form stream EP. Stream EP is cooled with subsequent condensate removal in step 22 to form stream EQ. Thereafter, stream EQ is dried in step 23 to form stream J.

Stream J is cooled by using liquid CO₂ stream R1, and further cooled through heat integration with stream LO in step 31 to form stream J', that stream J' being further subcooled by an ammonia refrigeration system in step 32 to form a partially liquified stream J". Stream J" is separated in the gas/liquid separation step 33 to form the liquid, CO₂-rich stream K and the gaseous stream L. Stream K is further processed through the heat exchanger 35 resulting in stream K'. The liquid fraction K' is processed in the rectification column 40, forming the liquid, CO₂ rich stream R and the gaseous, CO₂ depleted stream M. The stream M is subjected to the condensing and the gas/liquid separation in step 41, whereby the liquid, CO₂ rich stream N and the gaseous, CO₂ depleted stream O are formed. Stream N is subjected to rectification in said column 40. Streams L and O are merged to LO and are used for cooling in step 31. The gaseous stream LO' is subjected to a physical absorption step 42, comprising a molecular sieve-based PSA step, whereby step 42 produces a higher polar fraction as the recycle stream P comprising CO₂ and a less polar fraction that forms stream G.

Stream R is split into the two liquid streams R1 and R2, whereby R1 is used for cooling in refrigeration steps 31, and the subsequent stream R1' is thereafter processed in the rectification column 40. Streams R1', K' and N are processed in rectification step 40. Stream R2 is further cooled in step 43by expansion to form liquid stream R2' that is stored in a liquid CO₂ tank 44. Boil-off gas S from 44 is recycled and blended with stream LO'.

100% of the cryogenically separated CO₂ stream F is withdrawn from method 100 as stream F1 at a flow rate of 436 kg/h and comprises 99,99 mol% of liquified, biogenic CO₂. Stream G from the CO₂ separation 8 has a flow rate of 181 kg/h, contains CH₄, H₂ and CO (Table 4) and comprises a caloric value of 32.2 MJ/kg or 36.0 MJ/m³. In this example stream G is not considered as fuel gas that is used in the combustion 6. However, its optional use in combustion 6 would enable to substitute at least a fraction of the fuel gas D1, whereby the share of stream D2 would be increased. Hence, a larger fraction of vapor comprising BVOC could be recovered as stream N from the vapor removal unit 7.

The process of the theoretical example 2 is simulated using Honeywell's process simulation software, UniSim R491, and selected characteristics of the said streams are listed in Table 5. The specific electrical duty of the cryogenic CO₂ separation and liquefaction is very low with 280 kW/t CO₂.

**Table 4: Gas compositions, flow rates and heating value of selected streams "Produced Oxygen Case"**

| **Gas composition** | **CO₂-rich Stream** (E1) | | **CO₂ Product** (F) | | **Fuel Gas** (G1) | |
|---|---|---|---|---|---|---|
| | (w%) | (mol%) | (w%) | (mol%) | (w%) | (mol%) |
| CO₂ | 69.7 | 49.9 | 100.00 | 99.99 | 5.2 | 2.3 |
| CO | 11.0 | 12.4 | 0.00 | 0.00 | 38.5 | 27.2 |
| H₂ | 0.0 | 0.5 | 0.00 | 0.00 | 0.1 | 1.2 |
| CH₄ | 16.1 | 31.5 | 0.00 | 0.01 | 56.3 | 69.3 |
| H₂O | 3.2 | 5.7 | 0.00 | 0.00 | 0.0 | 0.0 |
| N₂ | 0.0 | 0.0 | 0.00 | 0.00 | 0.0 | 0.0 |
| Flow rate (Nm³/h) | 447 | | 1,655 | | 203 | |
| Flow rate (kg/h) | 631 | | 3,248 | | 181 | |
| Caloric value (MJ/kg) | | | | | 32.2 | |
| Caloric value (MJ/m³) | | | | | 36.0 | |

**Table 5: Characteristics of the streams described in Example 2 "Produced Oxygen Case"**

| ***STREAM*** | **E1** | **EP** | **EQ** | **J** | **J'** | **J"** | ***K*** | **K'** | **R** | **R2** | **R2'** | **F** |
|---|---|---|---|---|---|---|---|---|---|---|---|---|
| Vapour Fraction | 1 | 1 | 1 | 1 | 1 | 0 | 0 | 0 | 0 | 0 | 0 | 0 |
| Temperature (°C) | 30.0 | 40.0 | 10.0 | 10.0 | -20.1 | -49.0 | -49.0 | -27.8 | -15.7 | -15.7 | -29.1 | -28.2 |
| Pressure (bar) | 1.3 | 23.0 | 22.6 | 22.6 | 22.5 | 22.4 | 22.4 | 25.0 | 22.0 | 22.0 | 14.9 | 14.9 |
| Molar Flow (Nm³/h) (gas) | 447 | 566 | 566 | 563 | 563 | 563 | 281 | 281 | 266 | 240 | 240 | 213 |
| Mass Flow (kg/h) | 631 | 892 | 892 | 890 | 890 | 890 | 532 | 532 | 523 | 470 | 470 | 418 |
| Std Ideal Liq Vol Flow (m³/h) | 0.98 | 1.30 | 1.30 | 1.30 | 1.30 | 1.30 | 0.67 | 0.67 | 0.63 | 0.57 | 0.57 | 0.51 |
| Heat Flow (kW) | -1380 | -2003 | -2012 | -2003 | -2011 | -2066 | -1368 | -1360 | -1349 | -1214 | -1216 | -1082 |

| ***STREAM*** | **L** | **R1** | **R1'** | **S** | **M** | **N** | **O** | **LO** | **LO'** | **P** | **G** | |
|---|---|---|---|---|---|---|---|---|---|---|---|---|
| Vapour Fraction | 1 | 0 | 1 | 1 | 1 | 0 | 1 | 1 | 1 | 1 | 1 | |
| Temperature (°C) | -49.0 | -15.7 | -15.7 | -28.2 | -18.5 | -39.8 | -39.1 | -48.3 | -17.0 | 12.2 | 1.4 | |
| Pressure (bar) | 22.4 | 22.0 | 22.0 | 14.9 | 21.8 | 25.0 | 22.4 | 22.4 | 22.4 | 1.3 | 1.2 | |
| Molar Flow (Nm³/h) (gas) | 283 | 27 | 27 | 27 | 125 | 84 | 42 | 325 | 325 | 122 | 203 | |
| Mass Flow (kg/h) | 357 | 52 | 52 | 53 | 223 | 161 | 63 | 421 | 421 | 239 | 181 | |
| Std Ideal Liq Vol Flow (m³/h) | 0.63 | 0.06 | 0.06 | 0.06 | 0.30 | 0.20 | 0.10 | 0.73 | 0.73 | 0.29 | 0.44 | |
| Heat Flow (kW) | -698 | -135 | -131 | -132 | -540 | -414 | -142 | -841 | -836 | -596 | -233 | |

### LIST OF REFERENCE NUMERALS

This list relates to the numerals used in Fig. 1:

| | | | |
|---|---|---|---|
| 100 | Method | | |
| 1 | Wood debarking | 6 | Combustion |
| 2 | Wood preparation | 7 | Vapor removal |
| 3 | Drying | 8 | Carbon dioxide separation |
| 4 | Carbonization | 9 | Oxygen source |
| 5 | Charcoal cooling | 10 | Bark preparation |

This list relates to the numerals used in Fig. 2:

| | | | |
|---|---|---|---|
| 200 | Carbon dioxide separation (8 in Fig. 1) | | |
| 21a | Compression | 35 | Heat exchanger |
| 21b | Cooling | 40 | Rectification column |
| 22 | Condensing | 41 | Gas/liquid separation |
| 23 | Drying | 42 | Physical absorption/desorption |
| 31 | Refrigeration | 43 | Cooling |
| 32 | Refrigeration | 44 | Liquid carbon dioxide storage |
| 33 | Liquid/gas separation | 45 | Vaporization |

This list relates to the numerals used in Fig. 3:

| | | | |
|---|---|---|---|
| 100 | Method | | |
| 3 | Drying | 7 | Vapor removal |
| 4 | Carbonization | 8 | Carbon dioxide separation |
| 5 | Charcoal cooling | 9 | Oxygen source |
| 6 | Combustion | | |

## Claims

1. A method (100) for the continuous co-production of at least two biogenic products of the group of charcoal, carbon dioxide (CO₂) and biogenic volatile organic compounds (BVOC) from biomass, preferably bio-derived cellulose- and/or lignin-containing material for use of the biogenic charcoal in metallurgical industry and/or agriculture, and for use of the biogenic CO₂ and/or BVOC as feedstock in the production of hydrocarbons, preferably in the production of methanol, naphtha, diesel and aviation fuel, and for use of charcoal and/or BVOC in heat and power production, for use of the biogenic CO₂ for injection into geological structures, wherein the method comprises at least:
- separating CO₂ (8) from a gas stream, whereby the CO₂ is formed in a combustion (6) and/or a carbonization (4), whereby said combustion (6) is preferably combined with said carbonization (4), whereby said combustion (6) is more preferably physically integrated with said carbonization (4), and whereby dried cellulose- and/or lignin-containing material being formed in drying (3) is present while fuel is combusted in combustion (6), and whereby at least a part of the separated CO₂ from a CO₂ separation (8) is withdrawn from method (100),
- converting dried cellulose- and/or lignin-containing material to charcoal in the carbonization (4), whereby flue gas formed in combustion (6) is passed through the carbonization (4) comprising less than 5 mol% oxygen (O₂), preferably less than 1 mol% O₂, most preferably 0% O₂ content,
- operating the combustion (6) with an oxygen deficit, whereby gaseous, liquid and/or solid fuels are combusted, and whereby O₂ is exclusively provided as produced O₂, and whereby a gas phase concentration of said O₂ in the combustion (6) is between 10-50 mol%, preferably between 15-40 mol%, and most preferably between 20-35 mol%,
- whereby said oxygen for combustion (6) is produced in an O₂ production (9) by at least one of the following methods comprising cryogenic air separation, vacuum pressure swing absorption and water electrolysis, and whereby the said produced O₂ has a purity of at least 90 mol%, preferably at least 95 mol%, most preferably at least 99 mol%.

2. The method (100) according to claim 1, in which at least a part of the heated flue gas from combustion (6) is introduced to and/or directed through the carbonization (4).

3. The method (100) according to any of the preceding claims, in which the carbonization (4) is at least in part indirectly heated by the combustion (6).

4. The method (100) according to any of the preceding claims, in which the charcoal yield is at least 20 w%, preferably at least 25 w%, and most preferably 30 w% of dry matter of said cellulose- and lignin-containing material.

5. The method (100) according to any of the preceding claims, in which the carbonization (4) of the cellulose- and/or lignin-containing material is carried out at less than 950°C, preferably at less than 700°C and most preferably at less than 600°C.

6. The method (100) according to any of the preceding claims, in which a first part of the gases formed in the carbonization (4) is used as fuel in the combustion (6).

7. The method (100) according to any of the preceding claims, in which the CO₂ separation (8) is of cryogenic nature comprising at least compressing (21a), cooling (21b), condensing (22) and drying (23) in a group (20) of method steps, refrigeration (31) and/or (32) with partial gas liquefaction, and rectification (40).

8. The method (100) according to any of the preceding claims, wherein in the CO₂ separation (8) at least a part of the gas phase formed by refrigeration (31 and/or 32) is subjected to a physical absorption/desorption step (42) forming a higher polar fraction comprising CO₂ and a less polar fraction comprising carbon monoxide and hydrogen.

9. The method (100) according to any of the preceding claims, wherein the CO₂ separation (8) provides at least one gas stream comprising a caloric value of more than 5 MJ/kg, preferably more than 15 MJ/kg and most preferably more than 20 MJ/kg.

10. The method (100) according to any of the preceding claims, in which from a second part of gases formed in the carbonization (4), at least parts of comprised water and/or BVOC are removed in a vapor removal step (7).

11. The method (100) according to any of the preceding claims, in which the thermal power that is generated in the combustion (6) is at least in part used to heat the carbonization (4) and/or drying (3), whereby at least a part of the flue gas stream from the combustion (6) is passed through the carbonization (4) and/or the drying (3).

12. The method (100) according to any of the preceding claims, in which the different gas and vapor streams from drying (3), carbonization (4) and/or combustion (6) are processed as individual streams in the vapor separation (7), generating at least two different, condensed vapor streams, whereby the stream from drying (3) comprises a larger fraction of hydrophilic than hydrophobic BVOC, whereby the stream from carbonization (4) comprises a larger fraction of hydrophobic than hydrophilic BVOC.

13. The method (100) according to any of the preceding claims, in which the cellulose- and/or lignin-containing material is pre-processed material of a uniform shape and size, preferably pre-processed wood of a uniform shape and size, most preferably pre-processed heartwood of a uniform shape and size.

14. An apparatus for the continuous co-production of at least two biogenic products of the group of charcoal, CO₂ and BVOC, whereby these products are produced from biomass, preferably bio-derived cellulose- and/or lignin-containing material, said apparatus comprises at least the following process units:
- a CO₂ separation unit (8) that separates CO₂ from a gas stream, whereby the CO₂ is formed in the combustion (6) and/or the carbonization (4) and whereby the unit (8) comprises at least compressing and cooling (21), condensing (22) and drying (23) in a group (20) of method steps, and refrigeration (31) and/or (32) with partial gas liquefaction, and rectification (40),
- a carbonization unit (4) for converting the dried cellulose- and/or lignin-containing material to charcoal, whereby the carbonization (4) is least in part directly and/or indirectly heated by the combustion (6), whereby said combustion (6) is preferably combined with said carbonization (4) and whereby dried cellulose- and/or lignin-containing material being formed in drying (3) is present while gases are combusted, and whereby at least a part of the heated flue gas from combustion (6) is passed through the carbonization (4) with less than 5 mol% O₂, preferably with less than 1 mol% O₂, most preferably with 0% O₂ content, and
- a combustion unit (6) that is operated with an oxygen deficit, whereby gaseous, liquid and/or solid fuels are oxidized, and whereby O₂ is exclusively provided as produced O₂, and whereby a gas phase concentration of said O₂ in the combustion (6) is between 10-50 mol%, preferably between 15-40 mol%, and most preferably between 20-35 mol%.

15. A method (100) for the continuous co-production of at least two biogenic products of the group of charcoal, CO₂ and BVOC, whereby the said charcoal is produced by the method (100) to be used in production of metals, preferably to be used in the production of iron, ferroalloys and ferrochrome as reduction agent and/or to achieve a specific carbon content in a metal product, to be used in the production of metallurgic silicon as reduction agent, and whereby the products CO₂ and BVOC are produced by the method (100) to be used as educts in the production of hydrocarbons, preferably to be used in the production of naphtha and fuels, most preferably to be used in the production of methanol, diesel and aviation fuel, and whereby the charcoal is produced by the method (100) to be used in agriculture, and whereby the charcoal and BVOC produced by the method (100) to be used in heat and power production, and whereby the biogenic CO₂ produced by the method (100) to be used for injection into geological structures, whereby said co-products charcoal CO₂ and/or BVOC are continuously produced from biomass, preferably bio-derived cellulose- and/or lignin-containing material, said method (100) comprising at least the following steps of
- separating CO₂ (8) from a gas stream, whereby the CO₂ is formed in a combustion (6) and/or a carbonization (4), whereby said combustion (6) is preferably combined with said carbonization (4) and whereby dried cellulose- and/or lignin-containing material being formed in drying (3) is present while gases are combusted, and whereby at least a part of the separated CO₂ from a CO₂ separation (8) is withdrawn from method (100),
- converting dried cellulose- and/or lignin-containing material to charcoal in the carbonization (4), whereby a gas stream is introduced to the carbonization (4) with less than 5 mol% O₂, preferably with less than 1 mol% O₂, most preferably with 0% O₂ content,
- operating the combustion (6) with an oxygen deficit, whereby gaseous, liquid and/or solid fuels are oxidized, and whereby O₂ is exclusively provided as produced O₂, and whereby a gas phase concentration of said O₂ in the combustion (6) is between 10-50 mol%, preferably between 15-40 mol%, and most preferably between 20-35 mol%, and
- whereby said oxygen for combustion (6) is produced in an O₂ production (9) by at least one of the following methods comprising cryogenic air separation, vacuum pressure swing absorption and water electrolysis, and whereby the said produced O₂ has a purity of at least 90 mol%, preferably at least 95 mol%, most preferably at least 99 mol%.
